# FASCICULE DE BREVET EUROPEEN

(11) **EP 3 487 597 B1**
(45) Date de publication et mention de la délivrance du brevet: **21.01.2026**
(21) Numéro de dépôt: 17754745.2
(22) Date de dépôt: 21.07.2017
(51) Int. Cl.: B01D 11/04, B01J 45/00, C02F 1/68, C02F 5/10, C22B 3/38

(54) **MÉTHODE D'EXTRACTION DE SELS ET COMPOSITION EXTRACTANTE RÉGÉNÉRÉE EN TEMPÉRATURE**
VERFAHREN ZUR EXTRAKTION VON SALZEN UND TEMPERATURREGENERIERTE EXTRAKTIONSZUSAMMENSETZUNG
METHOD FOR EXTRACTING SALTS AND TEMPERATURE-REGENERATED EXTRACTING COMPOSITION

(30) Priorité: 22.07.2016 FR 1657078
(43) Date de publication de la demande: 29.05.2019
(73) Titulaire: Adionics, 75007 Paris (FR)
(72) Inventeur: DE SOUZA, Guillaume, 91800 Brunoy (FR); POUESSEL, Jacky, 91470 Forges Les Bains (FR); DAUTRICHE, Bastien, 49000 Angers (FR)
(74) Mandataire: Cabinet Chaillot
(86) Numéro de dépôt international: PCT/FR2017/052021
(87) Numéro de publication internationale: WO 2018/015693

(56) Documents cités:
- WO-A1-2011/077045
- US-B1- 6 566 561
- RUBIN GULABOSKI ET AL: "A Comparative Study of the Anion Transfer Kinetics Across a Water/Nitrobenzene Interface by Means of Electrochemical Impedance Spectroscopy and Square-Wave Voltammetry at Thin Organic Film-Modified Electrodes", LANGMUIR, vol. 22, no. 7, 1 March 2006 (2006-03-01), US, pages 3404 - 3412, XP055718202, ISSN: 0743-7463, DOI: 10.1021/la052565k
- MAKRLIK ET AL: "Solvent Extraction of Some Diva lent Metal Cations into Nitrobenzene by Using a Synergistic Mixture of Strontium Dicarbollylcobaltate and p-tert-Butylcalix[4]arene-tetrakis (N,N-Diethylacetamide)", ACTA CHIM. SLOV, vol. 59, 1 January 2012 (2012-01-01), pages 934 - 938, XP055352760, Retrieved from the Internet <URL:http://acta-arhiv.chem-soc.si/59/59-4-934.pdf> [retrieved on 20170308]
- M. A. NORATO ET AL: "Demonstration Of The Caustic-side Solvent Extraction Process For The Removal Of 137 Cs From Savannah River Site High Level Waste", SEPARATION SCIENCE AND TECHNOLOGY, vol. 38, no. 12-13, 8 January 2003 (2003-01-08), pages 2647 - 2666, XP055352863, ISSN: 0149-6395, DOI: 10.1081/SS-120022565
- TATIANA G. LEVITSKAIA ET AL: "Synergistic Pseudo-Hydroxide Extraction: Synergism and Anion Selectivity in Sodium Extraction Using a Crown Ether and a Series of Weak Lipophilic Acids", ANALYTICAL CHEMISTRY, vol. 75, no. 3, 1 February 2003 (2003-02-01), pages 405 - 412, XP055210681, ISSN: 0003-2700, DOI: 10.1021/ac0259212

## Description

### Domaine technique de l'invention

Le domaine technique de l'invention est l'extraction ionique de sels, particulièrement de sels hydrophiles, appliquée pour le traitement d'eaux salines industrielles ou naturelles.

### Art antérieur

Les activités minières, pétrolières ou industrielles peuvent générer des eaux résiduelles fortement salées, très entartrantes et/ou contaminées en métaux toxiques nécessitant un traitement avant rejet dans l'environnement, voire avant leur recyclage au sein d'un procédé industriel. Pour l'un ou l'autre de ces cas, les industriels ne disposent aujourd'hui que de solutions très couteuses et peu ou pas adaptées à leur environnement spécifique.

Il y a également des cas, en particulier pour des eaux salines très entartrantes riches en cations alcalino-terreux et/ou intégrant des métaux en traces, où il n'existe pas aujourd'hui de technologie de traitement durable et/ou économique de ces eaux ce qui oblige au stockage de ces eaux en bassins de décantation dans l'attente d'une solution.

Dans le cas de mélanges d'eaux de sources différentes ou très entartrantes il est fréquent qu'il y ait entartrage des équipements par précipitation de sels à faibles solubilité à l'eau comme certains sels de carbonates (MgCO₃, CaCO₃, SrCO₃, BaCO₃, CdCO₃, CoCO₃, MnCO₃, PbCO₃, NiCO₃, FeCO₃, ZnCO₃..), des sels de sulfates (CaSO₄, SrSO₄, BaSO₄, PbSO₄...), des sels de fluorures (MgF₂, CaF₂, SrF₂, BaF₂, CdF₂, FeF₂, PbF₂...), des sels d'hydroxydes métalliques (Mg(OH)₂, Ca(OH)₂, Cd(OH)₂, Co(OH)₂, Fe(OH)₂, Ni(OH)₂, Zn(OH)₂...), et bien d'autres pouvant être présents en forte quantité. De plus, si la technologie employée est associée à une vaporisation thermique de cette eau, la température d'usage, généralement dépassant les 80°C est alors génératrice d'une baisse du seuil de précipitation de certains sels (par exemple des sels de carbonates tels que le CaCO₃ par évaporation du dioxyde de carbone) et des sels à solubilité inversée (comme le CaSO₄), ce qui peut limiter d'autant plus le niveau maximum d'extraction de l'eau de l'eau salée ou générer un volume de déchets solides à gérer encore plus abondant.

Pour extraire un ion ou un sel présent sous forme dissoute dans une eau industrielle ou naturelle, l'approche courante consiste à employer la voie chimique, par exemple en s'assurant de la précipitation de celui-ci, par ajout d'un réactif, comme par exemple une base (NaOH...), permettant la précipitation des hydroxydes métalliques, non solubles dans l'eau. Cette voie est non sélective vis-à-vis des métaux précipités et correspond à un échange de cations (Na⁺ contre métal ici) ou d'anions et génère d'autres inconvénients comme l'ajout de nouveaux contaminants à traiter en aval et une baisse de l'efficacité avec une baisse de la concentration des composés cibles.

Une autre voie par extraction par solvant, dite hydro métallurgique peut également être mise en œuvre lorsqu'il s'agit de capter des métaux de type Nickel, Cobalt... en concentration plus élevée, via un échange de cations Mⁿ⁺/nH⁺. Ces procédés emploient des extractants cationiques dissous dans un solvant, mettant en œuvre une chimie acido-basique ou l'extraction et la régénération du solvant se font à des pH qui différent de plusieurs ordres de grandeur. Cette voie est donc consommatrice de bases (NaOH...) et d'acides (H₂SO₄...) couteux, résultant en l'ajout de nouveaux contaminants associés à la coproduction de sels (Na₂SO₄...) à gérer en aval.

Une autre voie également mise en œuvre depuis plus de 50 ans consiste à employer des membranes d'électrodialyse sélectives, à savoir perméables aux cations ou aux anions et non perméables à l'eau et aux molécules neutres en général. Dans ce cas, l'énergie électrique consommée est proportionnelle au sel déplacé ce qui limite son usage à des applications à forte valeur ajoutée dans le cas de traitement de saumures. Cette technologie est non sélective vis-à-vis des ions de même charge et est donc non sélective vis-à-vis des métaux ou anions à extraire, tout en étant à risque côté encrassement de la membrane.

D'autres voies existent, comme par exemple l'échange d'ions ou la sélectivité est dépendante de la charge de l'ion, limitée par la concentration de l'ion traité, et générant là aussi un apport de nouveaux contaminants issus de la régénération chimique des résines.

Plus récemment la demanderesse a divulgué dans la demande WO2010/086575 l'utilisation de composés fluorés dans un échangeur à contact direct comprenant une phase fluorée liquide et hydrophobe associée à des échangeurs d'ions. Cependant la phase fluorée organique liquide décrite dans cette demande décrit l'emploi de composés organo-fluorés ioniques et non ioniques associés à un procédé peu adapté à l'obtention de taux de dessalement d'eau élevés ou d'un dessalement sélectif de sels et en particulier d'un détartrage du fait d'une procédure de régénération inadaptée.

La demande de brevet US2008/179568A1 décrit un procédé d'extraction liquide-liquide de Césium et de Strontium en faible concentration employant deux types de molécules d'extractants cationiques, de la famille des éthers couronnes en concentration moyenne et des calixarènes en très faible concentration (0,0025 à 0,025 Mol/L) et au moins un modificateur dissous dans un diluant tel qu'un hydrocarbone isoparaffinique en C12-C15. Le modificateur peut être un alcool, une trioctylamine (TOA), le tri-n-butyle phosphate (TBP) ou leurs mélanges. Ce composé a pour but d'améliorer les capacités de l'extractant cationique et/ou sa capacité à rester solubilisé au cours de sa mise en œuvre.

La demande de brevet US2008/0014133 décrit un procédé d'extraction liquide-liquide de Césium et de Strontium en faible concentration par emploi de molécules d'extractants cationiques de la famille des éthers couronnes en faible concentration (0,04 à 0,095 Mol/L), combinés à un alcool fluoré (appelé Fluoroheptanol n₃) en forte proportion (>80% volume) et d'un éther de glycol. L'utilisation de composées calix[4]arène pour l'extraction de Strontium est divulguée par Norato et al. ("Demonstration Of The Caustic-side Solvent Extraction Process For The Removal Of 137 Cs From Savannah River Site High Level Waste",Separation Science and Technology, vol. 38, no. 12-13, pages 2647-2666).

Le brevet US6566561B1 décrit un procédé d'extraction liquide-liquide de Césium en faible concentration par emploi d'agents de solvatation et de modificateurs de phase de type phenoxy fluoro-alcool stable en milieu basique, en présence de molécules d'extractants cationiques de la famille des calixarènes-éthers-couronnes en faible concentration (0,001 à 0,20 Mol/L, 0,01 Mol/L préféré).

Une bibliographie très abondante existe dans ce domaine dans laquelle on peut citer l'article de T. G. Levitskaia, -et al. Anal. Chem. 2003, 75, 405-412 qui démontre qu'il est possible d'extraire de la soude (NaOH) d'une solution aqueuse par un emploi d'un extractant neutre du sodium, de type éther-couronne, avec un acide faible lipophile dé-protonable pour permettre la formation d'un alcoolate de sodium hydrophobe.

[DC18C6]_{(org)} + [RCOH]_{(org)} + [Na⁺]_{(aq)} + [OH⁻]_{(aq)} ↔ [RCO⁻Na⁺DC18C6]_{(org)} + H₂O_{(aq)}

Ce document présente également des exemples d'extraction de NaF, NaCl, NaBr, NaNO₃ et de NaClO₄, à 1 M de salinité, par combinaison de DC18C6 à 0,02M sans, puis avec sept acides faibles (de la famille des alcools), présents à hauteur de 0,04M, le tout dissous dans du nitrobenzène. Deux de ces alcools sont des alcools aromatiques fluorés dont le pKa est d'environs 8,8. Le taux d'extraction de sel pour des ions hydrophobes tels que le picrate, est relativement élevé. Cependant pour des anions hydrophiles, tel l'ion chlorure Cl⁻, les taux d'extractions de sels recalculés sont compris entre 0,06% et 0,16%, ce qui confirme la grande difficulté d'extraire le NaCl hydrophile de l'eau et le peu d'influence des alcools, à cette concentration, sur la performance d'extraction.

Des compositions liquides comprenant un calix[4]arène amide ou ester sont divulgués par Makrlik et al. ("Solvent Extraction of Some Divalent Metal Cations into Nitrobenzene by Using a Synergistic Mixture of Strontium Dicarbollylcobaltate and p-tert-Butylcalix[4]arene-tetrakis (N,N-Diethylacetamide)", Acta Chim. Slov,vol. 59, pages 934-938).

Il apparaît donc que l'industrie est aujourd'hui en attente d'une solution de traitement des saumures, polluées ou non par des métaux, qui soit efficace pour l'extraction de sels sur une large plage de salinité et beaucoup moins couteuse à l'investissement et dans sa mise en œuvre.

Il est également souvent attendu de pouvoir séparer les combinaisons d'ions entartrants, de les retirer ou de diminuer la présence de sels spécifiques et notamment ceux à l'origine d'un entartrage des équipements par ces eaux et/ou de valoriser une partie des composés inorganiques présents dans ces eaux, afin de financer tout ou partie ce traitement.

L'objet de cette demande de brevet est donc de décrire une nouvelle technologie de traitement d'eaux salines et d'eaux contaminées par des métaux, à même de répondre à ces problématiques par sa capacité à extraire de l'eau, de façon sélective ou massive, des sels à plus ou moins forte valeur économique pour le traitement d'eaux salines industrielles ou naturelles. Cette technologie pourra être largement appliquée pour permettre le rejet de ces eaux dans l'environnement dans le respect des écosystèmes, pour leur valorisation en tant qu'eau de procédé, pour apporter une valeur économique nouvelle ou supplémentaire dans le cadre d'une exploitation minière, pétrolière ou de recyclage de sels et/ou de cations métalliques à forte valeur ajoutée. Cette technologie nouvelle a également pour avantage de ne pas générer de contaminants nouveaux car les ions sont extraits de l'eau sous forme de sels de corps composés électriquement neutre qui sont ensuite désextraits du solvant extracteur via la mise en œuvre d'une régénération de l'actif extracteur par voie thermique et non chimique.

### Description de l'invention

Pour effectuer l'extraction de sels d'un milieu aqueux, la présente demande décrit un procédé de déionisation de l'eau par extraction liquide-liquide à régénération thermique employant une phase organique hydrophobe liquide comprenant ou étant essentiellement constitué de, ou constituée de,
- au moins un composé organique et hydrophobe électriquement neutre capable d'extraire (par exemple de solvater, de complexer ou de chélater) un cation des sels à extraire de la phase aqueuse, appelé MEC pour Molécule Extractante de Cation,
- au moins un deuxième composé organique et hydrophobe électriquement neutre capable de solvater les anions des sels à extraire du milieu aqueux, appelé MSA pour Molécule Solvatante d'Anions ; et, éventuellement,
- un fluidifiant, de préférence hydrophobe.

De manière surprenante l'association des MSA et MEC selon l'invention permet l'extraction synergique de sels neutres composés de cations et d'anions hydrophiles particulièrement difficiles à transférer dans une phase organique.

Par le terme « hydrophobe » on entend un composé, ou un mélange de composés, dont la solubilité dans l'eau, à 25°C, est au moins inférieure à 0,1 Mol/Litre. De préférence il est choisi des composés hydrophobes dont la solubilité dans l'eau à 25°C est inférieure à 0,01 Mol/L, de préférence inférieure à 0,0001 Mol/L et avantageusement de moins de 1x10⁻⁵ Mol/L. L'hydrophobicité ou la solubilité à l'eau d'un composé peut être mesuré par des méthodes standard et notamment par spectrométrie UV-visible.

### MEC

Un composé MEC tel que décrit dans la présente demande, ses mélanges et utilisations dans un procédé d'extraction d'une espèce cationique d'une eau contenant ladite espèce comme un procédé de déionisation de l'eau par extraction liquide-liquide à régénération thermique pour l'extraction d'au moins une espèce cationique divalente et d'au moins un anion complémentaire, font également partie de l'invention.

Le MEC qui permet l'extraction d'au moins un cation, peut avantageusement être choisi parmi les molécules ayant une bonne capacité d'extraction des ions alcalino-terreux, comme par exemple des ions calcium, strontium ou baryum ou d'autres cations divalents suivant le besoin de séparation. L'extraction est possible du fait d'un remplacement de la solvatation des cations et anions par l'eau par une solvatation de ceux-ci par la composition extractante qui permet alors une interaction avec les MEC et les MSA. La nature des interactions recouvre des phénomènes tels que des interactions ion-dipôle, accompagnées de l'établissement de liaisons hydrogènes et d'interactions électrostatiques, voire de liaisons de van der Waals. De préférence la MEC est un composé permettant de complexer, et en particulier de chélater le cation. Le « Chélate » se distingue du simple « *complexe* » par le fait que le cation est fixé au ligand chélateur par au moins deux liaisons/interactions.

Les MEC à considérer pour l'extraction sélective de cations divalents vis-à-vis de cations de métaux alcalins monovalents sont des macrocycles de la famille des Métacyclophanes (MCP) qui possèdent une cavité hydrophobe décrite par n cycles aromatiques de type phénol. La taille du macrocycle varie de 24 à 32 atomes, en particulier de carbone. De préférence la taille du macrocycle est de 24 à 28 atomes de carbones.

Ces cycles aromatiques de type phénol peuvent être reliés entre eux en position ortho de la fonction hydroxyle, soit directement ou par des ponts méthylènes à 1 carbone (-CH₂-) ou par des ponts à 2 carbones (-CH₂CH₂-) ou par des ponts à 3 carbones (-CH₂CH₂CH₂)-. Si seul des liaisons directes sont mises en œuvre, le nom usuel de ces macrocycles est Sphérand, de type [0ₙ]. Si seuls des ponts méthylènes à 1 carbone (-CH₂-) sont mis en œuvre, le nom usuel de ces macrocycles est Calixarènes, de type [1ₙ]. Si seuls des ponts à 2 carbones (-CH₂CH₂-) sont mis en œuvre, le nom usuel de ces macrocycles est all-homocalixarène, de type [2ₙ]. La taille des ponts peut également varier au sein d'un même macrocycle et varier de 0 et 3 atomes de carbones. La nomenclature précise cette variété en les nommant par exemple [1.3.1.3]MCP ou [1.3]₂MCP pour un macrocycle à 4 aromatiques reliés en ortho par successivement un pont méthylène puis par un pont à 3 carbones puis de nouveau par un pont méthylène et enfin par un pont à 3 carbones pour boucler le cycle.

Les macrocycles d'intérêt sont ensuite fonctionnalisés par des groupements amides non hydrogénés pour l'extraction sélective des alcalino-terreux, sans pour autant être également sélectifs pour l'extraction des métaux de transition divalents.

Ainsi un MEC permettant d'obtenir l'extraction sélective de cations non-alcalins, en particulier divalents, vis-à-vis de cations alcalins, en particulier monovalents, est un macrocycle, dont le cycle est formé de 24 à 32 atomes de carbones, fonctionnalisée par des groupements amides, et de formule (I) ou (II) suivantes : 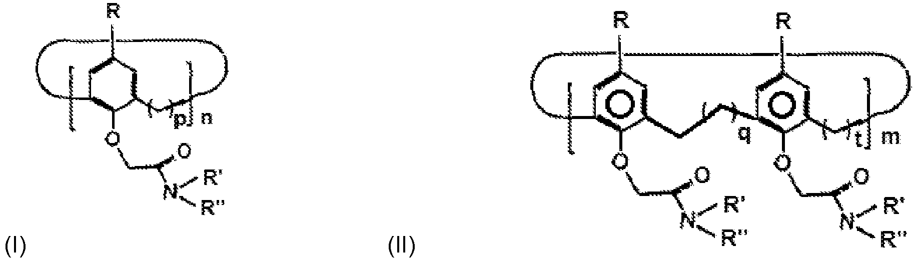 où
- n est un entier allant de 5 à 8,
- p est 1 ou 2,
- m est 3 ou 4,
- q et t, identiques ou différents, sont 0, 1 ou 2,
- R est un groupement tert-butyle, tert-pentyle, tert-octyle, O-méthyle, O-éthyle, O-propyle, O-isopropyle, O-butyle, O-isobutyle, O-pentyle, O-hexyle, O-heptyle, O-octyle, OCH₂Phényle, ou un atome d'hydrogène,
- R' et R", identiques ou différents, sont choisis dans le groupe constitué par les groupements méthyle, éthyle, propyle, isopropyle, butyle, isobutyle, pentyle, hexyle, heptyle et octyle, ou R' et R" forment ensemble un cycle pyrrolidine, piperidine ou morpholine.

Ainsi pour les composés de formule (I), les entiers n et p doivent être choisis tels que 24 ≤ (3+p) x n ≤ 32. Pour les composés de formules (II) les entiers m, q et t doivent être choisis tels que 24 ≤ (7+q+t) x m ≤ 32.

De telles molécules appartiennent à la famille des Métacyclophanes.

De manière avantageuse le MEC est une molécule de formule : 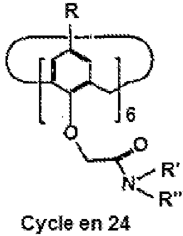 (de la famille des Calix[6]arènes, de type [1₆]),
où R, R' et R" sont tels que définis précédemment pour les formules (I) et (II). Lorsque R' et R" sont tous deux un groupement éthyle, l'extraction sélective des cations divalents est particulièrement forte, en particulier lorsque le radical R est tert-butyle, OCH₂Ph, H ou O-méthyle.

De manière avantageuse le MEC est une molécule de formule : 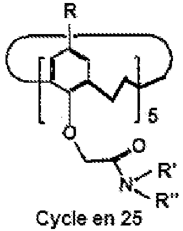 (de la famille des AII-homocalix[5]arènes, de type [2₅]),
où R, R' et R" sont tels que définis précédemment pour les formules (I) et (II).

De manière avantageuse le MEC est une molécule de formule : 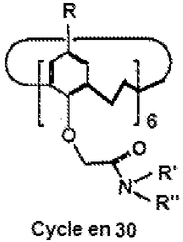 (de la famille des All-homocalix[6]arènes, de type [2₆]),
où R, R' et R" sont tels que définis précédemment pour les formules (I) et (II).

De manière avantageuse le MEC est une molécule de formule : 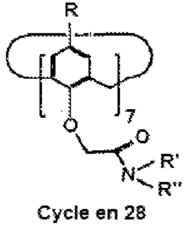 (de la famille des Calix[7]arènes, de type [1₇]),
où R, R' et R" sont tels que définis précédemment pour les formules (I) et (II).

De manière avantageuse le MEC est une molécule de formule : 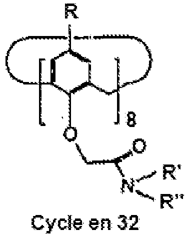 (de la famille des Calix[8]arènes, de type [1₈]),
où R, R' et R" sont tels que définis précédemment pour les formules (I) et (II). Lorsque R' et R" sont tous deux un groupement éthyle, l'extraction sélective des cations divalents est particulièrement intéressante, en particulier lorsque le radical R est tert-butyle, OCH₂Phényle, H ou O-méthyle.

De manière avantageuse le MEC est une molécule de formule : 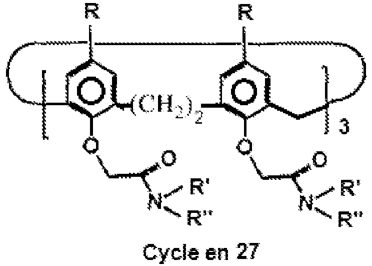 (de type [2.1.2.1.2.1]MCP ou [2.1]₃MCP),
où R, R' et R" sont tels que définis précédemment pour les formules (I) et (II).

De manière avantageuse le MEC est une molécule de formule : 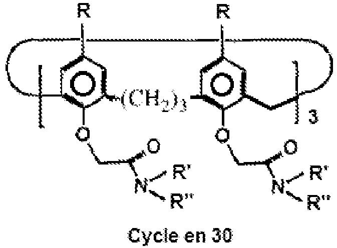 (de type [3.1.3.1.3.1]MCP ou [3.1]₃MCP),
où R, R' et R" sont tels que définis précédemment pour les formules (I) et (II).

De manière avantageuse le MEC est une molécule de formule : 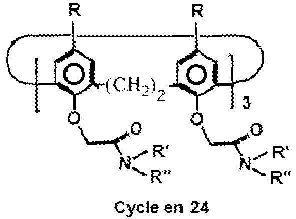 (de type [2.0.2.0.2.0]MCP ou [2.0]₃MCP),
où R, R' et R" sont tels que définis précédemment pour les formules (I) et (II).

De manière avantageuse le MEC est une molécule de formule : 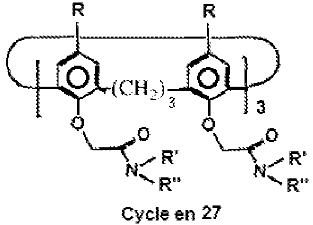 (de type [3.0.3.0.3.0]MCP ou [3.0]₃MCP),
où R, R' et R" sont tels que définis précédemment pour les formules (I) et (II).

De manière avantageuse le MEC est une molécule de formule : 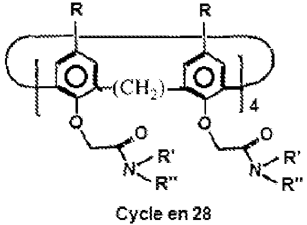 (de type [1.0.1.0.1.0.1.0]MCP ou [1.0]₄MCP),
où R, R' et R" sont tels que définis précédemment pour les formules (I) et (II).

De manière avantageuse le MEC est une molécule de formule : 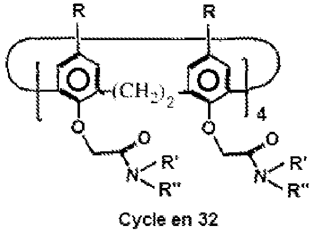 (de type [2.0.2.0.2.0.2.0]MCP ou [2.0]₄MCP),
où R, R' et R" sont tels que définis précédemment pour les formules (I) et (II).

Dans les formules (I) et (II) :
De manière particulièrement avantageuse le groupement R est le tert-butyle.

De manière particulièrement avantageuse les groupements R' et R" sont tous deux un groupement éthyle.

De manière particulièrement avantageuse le groupement R est le tert-butyle ou un atome d'hydrogène.

De manière particulièrement avantageuse le MEC est le composé de formule : 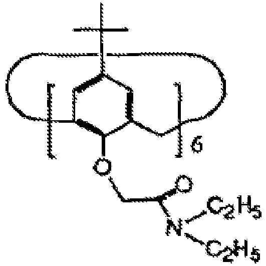 (de la famille des Calix[6]arènes, de type [1₆], et de numéro CAS : 111786-95-9). Ce MEC2 est particulièrement efficace pour l'extraction sélective de sels alcalino-terreux hydrophiles, en particulier de sels de chlorures, d'une solution aqueuse lorsqu'ils sont combinés à au moins un MSA et éventuellement un fluidifiant au sein d'un procédé d'extraction liquide-liquide à régénération thermique de la résine liquide, selon l'invention.
Des molécules appartenant à ces familles de formule (I) sont déjà identifiées par un numéro CAS, en particulier il s'agit des Molécules Extractantes de Cations suivantes :

| **N° CAS** | **R** | **Macrocycle** | **p** | **n** | **R'** | **R"** |
|---|---|---|---|---|---|---|
| 136534-29-7 | tert-Butyle | Calixarène | 1 | 6 | Pyrrolidinyle | |
| 111786-95-9 | tert-Butyle | Calixarène | 1 | 6 | Ethyle | Ethyle |
| 385376-74-9 | O-Octyle | Calixarène | 1 | 6 | Ethyle | Ethyle |
| 327154-32-5 | OCH2Phényle | Calixarène | 1 | 6 | Ethyle | Ethyle |
| 185330-54-5 | H | Calixarène | 1 | 6 | Ethyle | Ethyle |
| 327154-34-7 | O-méthyle | Calixarène | 1 | 6 | Ethyle | Ethyle |
| 315191-66-1 | tert-Butyle | Calixarène | 1 | 8 | Ethyle | Ethyle |
| 327154-36-9 | O-Octyle | Calixarène | 1 | 8 | Ethyle | Ethyle |
| 193743-58-7 | OCH2Phényle | Calixarène | 1 | 8 | Ethyle | Ethyle |
| 327154-37-0 | H | Calixarène | 1 | 8 | Ethyle | Ethyle |
| 315191-06-1 | O-méthyle | Calixarène | 1 | 8 | Ethyle | Ethyle |

La composition selon l'invention peut également comprendre plus d'un composé MEC permettant l'extraction d'au moins un cation, celui-ci pouvant avantageusement être choisi dans les composés décrits dans la présente demande.

Un autre objet de l'invention concerne l'utilisation de ces composés MEC pour l'extraction de sels et/ou d'ions d'un milieu aqueux. En particulier ces composés peuvent être utilisés, individuellement ou en mélange, dans une composition ou dans un procédé selon l'invention tels que décrits dans la présente demande.

Un autre objet de l'invention concerne l'utilisation de composés MEC de type macrocycles à taille de cycle comprise entre 16 et 22 atomes, en particulier, de carbones, et fonctionnalisés par des groupements amides, pour l'extraction de sel et en particulier de sel à anions hydrophiles tels que les sels de chlorures. Notamment ces composés, associés au MSA selon l'invention permettent l'extraction massive d'une solution contenant un mélange de tels sels par exemple de sels de chlorures comprenant différents cations ayant un rayon ionique compris entre 55 pm et 180 pm, avantageusement entre 70 pm et 167 pm, plus particulièrement allant de 75 pm à 167 pm. De tels cations sont notamment des cations lithium, sodium, potassium, rubidium ou césium, qui sont monovalents, ou de calcium, strontium ou baryum, qui sont divalents, voire des cations de métaux de transition. Notez que le magnésium, qui est un cation divalent de 72 pm de rayon ionique est une exception et n'est pas considéré comme étant suffisamment extractible pour que ces MEC puissent être utilisés industriellement dans un objectif de son extraction de l'eau.
Ces composés sont de formule générique (III) et (IV) : 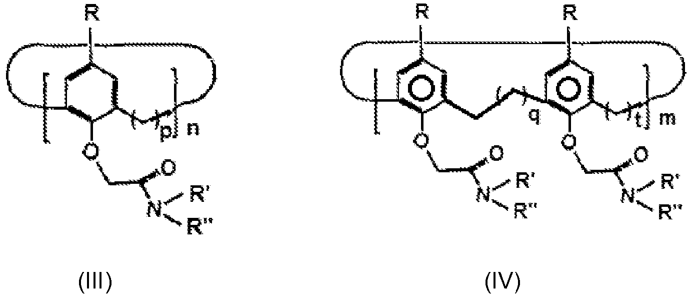 où
- n est 4 ou 5,-p est 1 ou 2,
- m est 2 ou 3,
- q et t, identiques ou différents, sont 0, 1 ou 2,
- R est un groupement tert-butyle, tert-pentyle, tert-octyle, O-méthyle, O-éthyle, O-propyle, O-isopropyle, O-butyle, O-isobutyle, O-pentyle, O-hexyle, O-heptyle, O-octyle, OCH₂Phényle, ou un atome d'hydrogène,
- R' et R", identiques ou différents, sont choisis dans le groupe constitué par les groupements méthyle, éthyle, propyle, isopropyle, butyle, isobutyle, pentyle, hexyle, heptyle et octyle, ou R' et R" forment ensemble un cycle pyrrolidine, piperidine ou morpholine.

Ainsi pour les composés de formule (III), les entiers n et p doivent être choisis tels que 16 ≤ (3+p) x n ≤ 22. Pour les composés de formule (IV) les entiers m, q et t doivent être choisis tels que 16 ≤ (7+q+t) x m ≤ 22.

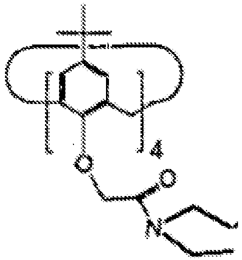

En particulier le macrocycle MEC1 de formule III où n=4, R = tert-butyle et R'=R"=éthyle et de n° CAS 114155-16-7, dans sa configuration cône, est particulièrement efficace pour l'extraction massive ou globale de sels hydrophiles, en particulier de sels de chlorures, d'une solution aqueuse lorsqu'il est combiné à au moins un MSA et éventuellement un fluidifiant au sein d'un procédé d'extraction liquide-liquide à régénération thermique de la résine liquide, selon l'invention.
Des molécules appartenant à ces familles de formules (III) et (IV) sont également déjà identifiées par un numéro CAS, en particulier il s'agit des MEC suivantes :

| **N° CAS** | **R** | **Macrocycle** | **p** | **n** | **R'** | **R"** | **Configuration** |
|---|---|---|---|---|---|---|---|
| 150588-24-2 | H | Calixarène | 1 | 4 | Ethyle | Ethyle | cône |
| 412334-02-2 | H | Calixarène | 1 | 4 | Butyle | Butyle | cône |
| 1558817-92-7 | H | Calixarène | 1 | 4 | Morpholidinyle | | cône |
| 149635-98-3 | H | Calixarène | 1 | 4 | piperidinyle | | cône |
| 145237-45-2 | tert-Butyle | Calixarène | 1 | 4 | Méthyle | Méthyle | cône |
| 114155-16-7 | tert-Butyle | Calixarène | 1 | 4 | Ethyle | Ethyle | cône |
| 162714-60-5 | tert-Butyle | Calixarène | 1 | 4 | Propyle | Propyle | cône |
| 116906-60-6 | tert-Butyle | Calixarène | 1 | 4 | Butyle | Butyle | cône |
| 162714-61-6 | tert-Butyle | Calixarène | 1 | 4 | Pentyle | Pentyle | cône |
| 162714-62-7 | tert-Butyle | Calixarène | 1 | 4 | Hexyle | Hexyle | cône |
| 162714-63-8 | tert-Butyle | Calixarène | 1 | 4 | Octyle | Octyle | cône |
| 162714-67-2 | tert-Butyle | Calixarène | 1 | 4 | Ethyle | CH2-Ph | cône |
| 353236-42-7 | tert-Butyle | Calixarène | 1 | 4 | Méthyle | Heptyle | cône |
| 171800-66-1 | tert-Butyle | Calixarène | 1 | 5 | Ethyle | Ethyle | cône |
| 133801-01-1 | tert-Butyle | Calixarène | 1 | 4 | pyrrolidinyle | | cône |
| 353236-41-6 | tert-Butyle | Calixarène | 1 | 4 | piperidinyle | | cône |
| 353236-67-6 | tert-Butyle | Calixarène | 1 | 4 | morpholinyle | | cône |

Pour les calixarènes, les configurations de cycle de type cône et voire de type cône partiel sont à privilégier par rapport aux configurations de type 1,2 alternée ou 1,3 alternée, sans pour autant que ces configurations alternées soient exclues.
D'autres cycles de type Métacyclophanes à 20 carbones sont identifiés :

| **N° CAS** | **R** | **Macrocycle** | **t** | **q** | **m** | **R'** | **R"** | **Configuration** |
|---|---|---|---|---|---|---|---|---|
| 353742-72-0 | tert-Butyle | MCP[1.3]2 | 1 | 2 | 2 | Ethyle | Ethyle | 1,4-alternée |
| 352742-73-1 | tert-Butyle | MCP[1.3]2 | 1 | 2 | 2 | Méthyle | Méthyle | 1,4-alternée |
| 353742-74-2 | tert-Butyle | MCP[1.3]2 | 1 | 2 | 2 | Butyle | Butyle | 1,4-alternée |

Un aspect préférentiel de l'invention est que le MEC de formule (III) ou (IV) présente une constante de complexation Log K, dans le méthanol à 25 C°, de l'espèce cationique à extraire, de valeur supérieure à 3 et inférieure à 11, de préférence supérieure à 5 et inférieure à 9.

Ces MEC de type amide sont particulièrement bien adaptées au procédé d'extraction liquide-liquide par différence de température selon l'invention.

Un autre objet de l'invention concerne l'utilisation de composés MEC fonctionnalisés par des groupements ester ou cétone pour l'extraction sélective des cations alcalins, vis-à-vis des cations alcalino-terreux, sans pour autant être sélectif pour l'extraction de métaux de transition monovalents (Argent Ag⁺). En particulier ces composés peuvent être utilisés, individuellement ou en mélange, dans une composition ou dans un procédé selon l'invention tels que décrits dans la présente demande.

Un autre objet de l'invention concerne l'utilisation de composés MEC de type macrocycles à taille de cycle comprise entre 16 et 24 atomes, en particulier, de carbones, et fonctionnalisés par des groupements ester ou cétone, pour l'extraction sélective de sels alcalins et en particulier de sels alcalins à anions hydrophiles tels que les sels de chlorures. Notamment ces composés, associés au MSA selon l'invention permettent l'extraction sélective d'un ou de plusieurs sels alcalins d'une solution contenant un mélange de tels sels par exemple de sels de chlorures comprenant différents cations ayant un rayon ionique compris entre 55 pm et 180 pm, avantageusement entre 70 pm et 167 pm. De tels cations sont notamment des cations lithium, sodium, potassium, rubidium et de césium qui sont monovalents ou de calcium, strontium, baryum qui sont divalents, voire des cations de métaux de transition.
Ces composés sont de formule générique (V) et (VI) : 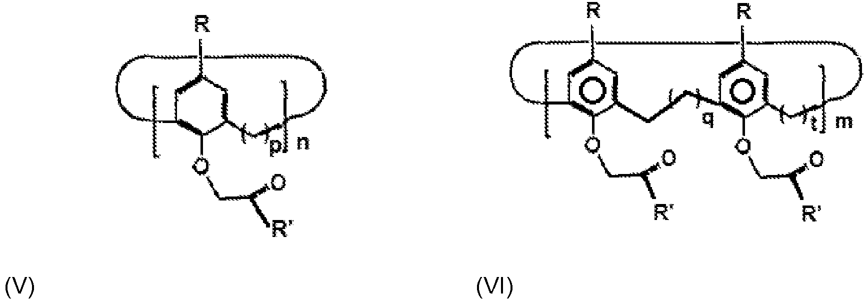 où
- n est 4, 5 ou 6,
- p est 1 ou 2,
- m est 2 ou 3,
- q et t, identiques ou différents, sont 0, 1 ou 2,
- R est un groupement tert-butyle, tert-pentyle, tert-octyle, ou un atome d'hydrogène,
- R' est choisi dans le groupe constitué par les groupements méthyle, éthyle, propyle, isopropyle, butyle, isobutyle, pentyle, hexyle, heptyle et octyle, pour la réalisation d'un groupement liant de type cétone ou, R' est choisi dans le groupe constitué par les groupements O-méthyle, O-éthyle, O-propyle, O-isopropyle, O-butyle, O-isobutyle, O-pentyle, O-hexyle, O-heptyle, O-octyle, OCH₂Phényle pour la réalisation d'un groupement liant de type ester.

Ainsi pour les composés de formule (V), les entiers n et p doivent être choisis tels que 16 ≤ (3+p) x n ≤ 24. Pour les composés de formule (VI) les entiers m, q et t doivent être choisis tels que 16 ≤ (7+q+t) x m ≤ 24.

En particulier le macrocycle MEC10 de formule (V) où n=4, R=tert-butyle et R'=O-éthyle et de n° CAS 97600-39-0, dans sa configuration cône, est particulièrement efficace pour l'extraction sélective des sels de sodium, en particulier en tant que sel de chlorure de sodium, d'une solution aqueuse lorsqu'il est combiné à au moins un MSA et éventuellement un fluidifiant au sein d'un procédé d'extraction liquide-liquide à régénération thermique de la résine liquide, selon l'invention.

En particulier les macrocycle MEC11 de formule (V) où n=5, R=tert-butyle et R'=O-éthyle et de n° CAS 152495-34-6, et MEC12 de formule (V) où n=6, R = tert-butyle et R"=O-éthyle et de n° CAS 97600-45-8, dans leurs configurations cône, sont particulièrement efficaces pour l'extraction sélective des sels alcalins vis-à-vis des sels d'alcalino-terreux, en particulier en tant que sels alcalins de chlorure, d'une solution aqueuse lorsqu'il est combiné à au moins un MSA et éventuellement un fluidifiant au sein d'un procédé d'extraction liquide-liquide à régénération thermique de la résine liquide, selon l'invention. Le MEC11 est adapté pour extraire les sels de chlorures alcalins plus globalement (hormis le lithium) tandis que le MEC12 pour un diamètre de cycle plus large de 24 a une capacité d'extraction des alcalins plutôt de grand diamètre (césium, rubidium, voire potassium).

Des molécules appartenant à ces familles de formules (V) et (VI) sont également déjà identifiées par un numéro CAS, en particulier il s'agit des MEC suivantes :

| **N° CAS** | **R** | **Macrocycle** | **p** | **n** | **R'** | **Configuration** |
|---|---|---|---|---|---|---|
| 97600-43-6 | H | Calixarène | 1 | 4 | O-Ethyle | cône |
| 144508-85-0 | H | Calixarène | 1 | 4 | O-Iso-propyle | cône |
| 144508-84-9 | H | Calixarène | 1 | 4 | O-Tert-butyle | cône |
| 97600-39-0 | tert-Butyle | Calixarène | 1 | 4 | O-Ethyle | cône |
| 160617-97-0 | tert-Butyle | Calixarène | 1 | 4 | O-Iso-propyle | cône |
| 94530-27-5 | tert-Butyle | Calixarène | 1 | 4 | O-Tert-butyle | cône |
| 149775-74-6 | Tert-Octyle | Calixarène | 1 | 4 | O-Ethyle | cône |
| 152495-34-6 | tert-Butyle | Calixarène | 1 | 5 | O-Ethyle | cône |
| 123311-70-6 | tert-Butyle | Calixarène | 1 | 4 | Tert-butyle | cône |

Pour les calixarènes, les configurations de cycle de type cône et voire de type cône partiel est à privilégier par rapport aux configurations de type 1,2 alternée ou 1,3 alternée, sans pour autant être exclusif.

Selon un mode de réalisation préféré, la composition ne comprend pas de MEC de formule (V) ou (VI) permettant l'extraction d'ions calcium, c'est-à-dire dont sa constante de complexation Log K(Ca⁺⁺) dans le méthanol à 25°C, est supérieure à 3. Un aspect préférentiel de l'invention est que le MEC de formule (V) ou (VI) présente une constante de complexation Log K, dans le méthanol à 25 C°, de l'espèce cationique alcaline à extraire, de valeur supérieure à 3 et inférieure à 11, de préférence supérieure à 5 et inférieure à 9. De plus dans le cas de MEC sélectifs pour l'extraction des espèces cationiques alcalines, il peut présenter une valeur de Log K, dans le méthanol à 25°C, inférieure à 5, de préférence inférieure à 3 pour les cations alcalino-terreux, et en particulier pour le calcium.

Ces MEC de type ester ou cétone, de formule (V) ou (VI) sont particulièrement bien adaptées au procédé d'extraction liquide-liquide par différence de température selon l'invention.

### Composé MSA

Parmi les MSA décrits ci-dessous, seul les composées tombant sous la définition tel que comprise dans les revendications, font parti de la présente invention.

Le MSA peut être un composé comprenant de 6 à 50 atomes de carbone, avantageusement de 7 à 30 atomes de carbones, et notamment de 8 à 20 atomes de carbones, et intégrant au moins un cycle aromatique et au moins un atome d'halogène ou un groupement électro-attracteur, en particulier fluoré.

Avantageusement le MSA est un composé de formule B : 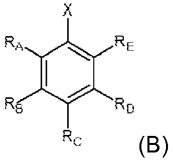
dans laquelle au moins un quelconque des radicaux R_{A}, R_{B}, R_{C}, R_{D} et R_{E}, identiques ou différents, est un atome halogène ou un groupement électro-attracteur, en particulier un radical halogéné, du groupe suivant :
   - F, Cl, Br,
   - CₘF₂ₘ₊₁ avec m ≤ 4, où m est un entier non nul,
   - CF₂CF₂CₚH₂ₚ₊₁ avec p ≤ 4, où p est un entier,
   - CF₂CₚH₂ₚ₊₁ avec p ≤ 4, où p est un entier,
   - CH₂CₚF₂ₚ₊₁ avec p ≤ 4, où p est un entier,
   - OCH₂CF₃,
   - C(=O)CF₃,
   - CₘHₙFₚCl_{q}Brₛ avec m ≤ 4, où n, p, q, s sont des entiers dont au moins p, q ou s est non nul,
   - C(=O)OCₘH₂ₘ₊₁ avec m ≤ 4, où m est un entier, et
   - C(=O)CₘH₂ₘ₊₁ avec m ≤ 4, où m est un entier,
le ou les radicaux R_{A}, R_{B}, R_{C}, R_{D} et R_{E} restant(s) sont choisis, identiques ou différents, parmi les radicaux non électro-attracteurs suivants :
   - H,
   - CH₃,
   - CH₂CH₃,
   - CH₂CH₂CₚF₂ₚ₊₁ avec p ≤ 4, ou p est un entier,
   - CₘH₂ₘ₋₁ avec 3 ≤ m ≤ 10, où m est un entier, et
   - CₘH₂ₘ₊₁ avec 3 ≤ m ≤ 10, où m est un entier ;
où un seul des radicaux R_{A} à R_{E} peut être un de ces deux derniers radicaux CₘH₂ₘ₋₁ et CₘH₂ₘ₊₁ ;
et dans lequel X est choisi parmi les radicaux suivants :
   - OH,
   - NH-R',
      - 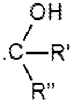
      - 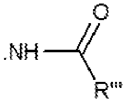
      - 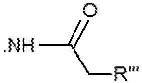
      - 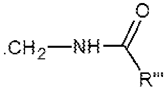
ou R' et R", identiques ou différents, sont choisis parmi les radicaux suivants :
   - H,
   - CₙH₂ₙ₋₁ avec 3 ≤ n ≤ 4, où n est un entier,
   - CₙH₂ₙ₊₁ avec n ≤ 4, où n est un entier non nul,
   - CH₂CH₂CₚF₂ₚ₊₁ avec p ≤ 2, où p est un entier,
   - CH₂CₚF₂ₚ₊₁ avec p ≤ 2, où p est un entier,
   - et un radical aryle de formule b : 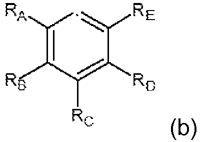 où R_{A}, R_{B}, R_{C}, R_{D} et R_{E}, identiques ou différents, sont tels que précédemment définis dans la formule B;
et dans laquelle R"' est choisi parmi les radicaux suivants :
   - CₘH₂ₘ₊₁ avec m ≤ 20, de préférence ≤ 15, où m est un entier,
   - CₘH₂ₘ₋₁ avec 3 ≤ m ≤ 20, où m est un entier,
   - CₘHₙFₚCl_{q}Brₛ avec m ≤ 10, où n, p, q, s sont des entiers dont au moins p, q ou s est non nul,
   - CH₂CH₂CₚF₂ₚ₊₁ avec p ≤ 4, où p est un entier,
   - CH₂CₚF₂ₚ₊₁ avec p ≤ 4, où p est un entier,
   - CF₂CₚH₂ₚ₊₁ avec p ≤ 4, où p est un entier,
   - CF₂CF₂CₚH₂ₚ₊₁ avec p ≤ 4, où p est un entier,
   - CₘF₂ₘ₊₁ avec m ≤ 4, où m est un entier non nul,
   - et un radical aryle de formule b : 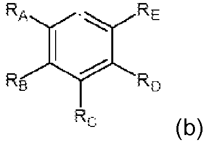 où R_{A}, R_{B}, R_{C}, R_{D} et R_{E}, identiques ou différents, sont tels que précédemment définis dans la formule B.

### Composé MSA - alcool

Un tel composé est avantageusement choisi dans le groupe des aromatiques fluorés à fonction alcool et de leurs dérivés. Par exemple ce composé peut-être un alcool dérivé d'un phényle méthanolique, tel que le 3-(Trifluoromethyl)benzyl alcohol (N° CAS : 349-75-7).

De préférence, ce premier composé est un composé phényle méthanolique qui comprend avantageusement plus de 3 atomes de fluor. Avantageusement ce composé comprend au moins deux radicaux -CF₃.

Selon un mode de réalisation de l'invention ce premier composé MSA a pour radical X dans la formule B : 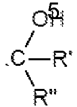 qui correspond à un composé de formule A : 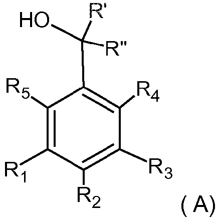 dans laquelle
R₁, R₂, R₃, R₄ et R₅, identiques ou différents, mais où l'un quelconque de R₁, R₂ et R₃ est un radical fluoré, sont choisis parmi les radicaux suivants :
   - H,
   - F,
   - CₘF₂ₘ₊₁ avec m ≤ 4, où m est un entier non nul,
   - CF₂CF₂CₚH₂ₚ₊₁ avec p ≤ 4, où p est un entier, et
   - CF₂CₚH₂ₚ₊₁ avec p ≤ 4, où p est un entier ;
et dans laquelle R' et R", identiques ou différents, sont choisis parmi les radicaux suivants :
   - H
   - CₙH₂ₙ₋₁ avec 3 ≤ n ≤ 4, où n est un entier,
   - CₙH₂ₙ₊₁ avec n ≤ 4, où n est un entier non nul,
   - CH₂CₚF₂ₚ₊₁ où p ≤ 2, où p est un entier,
   - CH₂CH₂CₚF₂ₚ₊₁ où p ≤ 2, où p est un entier,
   - et un radical aryle de formule a : 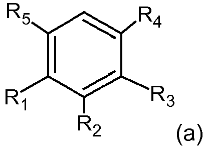
où R₁, R₂, R₃, R₄ et R₅, identiques ou différents, sont choisis dans le groupe
   - H
   - F
   - CₘF₂ₘ₊₁ avec m ≤ 4,
   - CF₂CF₂CₚH₂ₚ₊₁ avec p ≤ 4, où p est un entier,
   - CF₂CₚH₂ₚ₊₁ avec p ≤ 4, où p est un entier.

### Composés MSA - Alcool

Avantageusement ledit premier composé est choisi dans le groupe constitué par les composés décrits dans le tableau I suivant :

**Tableau I :**

| **MSA Alcool. Formule semi développée** | **Formule brute n° CAS** | **Masse molaire (g/mole)** | **Densité (g/cm3)** | **[MSA] maximale Mole/L** | **Solubilité à l'eau mMole/L** | **pKa** |
|---|---|---|---|---|---|---|
| 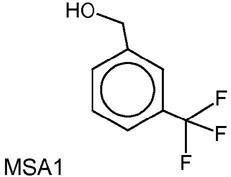 | C8H7F3O | 176,14 | 1,29 | 7,32 | 32 | 14,6 +/-1,0 (estimé) |
| | 349-75-7 | | Liquide | | | |
| 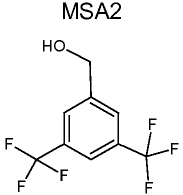 | C9H6F6O | 244,13 | 1,43 | 5,86 | 2,29 | 14,5 +/-1,0 (estimé) |
| | 32707-89-4 | | Solide | | | |
| 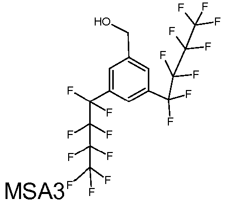 | C15H6F1O | 544,18 | 1,62 | 2,98 | 0,0005 | 14,01 +/-0,1 |
| | 916975-23-0 | | | | | |
| 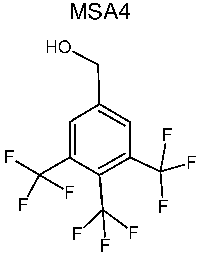 | C10H5F9O | 312,13 | 1,53 | 4,90 | 0,39 | 13,59 +/-0,1 |
| | 1010101-84-4 | | | | | |
| MSA5 | C11H9F7O | 290,18 | 1,39 | 4,70 | 0,42 | 14,5 +/-1,0 |
| | 131608-30-5 | | | | | |
| 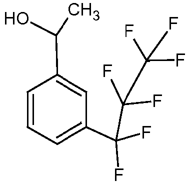 | | | | | | (estimé) |
| 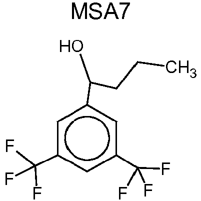 | C12H12F6O | 286,21 | 1,30 | 4,54 | 0,48 | 13,9 +/-1,0 (estimé) |
| | 742097-71-8 | | Liquide | | | |
| 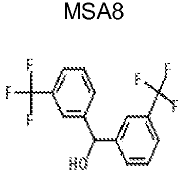 | C15H10F6O | 320,23 | 1,37 | 4,28 | 0,07 | 13,3 +/-1,0 (estimé) |
| | 1598-89-6 | | Liquide | | | |

Selon un aspect de l'invention, la composition liquide organique hydrophobe comprend au moins un composé permettant la solvatation d'au moins un anion. De préférence, ces composés sont choisis parmi les composés de type (MSA) décrits dans la présente demande.

En particulier, la composition liquide selon l'invention peut comprendre une forme solide de MSA, comme le [3,5-Bis(Trifluorométhyl)phényl]methanol (N° CAS : 32707-89-4) combiné à un fluidifiant ou diluant liquide hydrophobe.

Alternativement, la composition liquide selon l'invention peut comprendre une MSA solide (aux températures opérationnelles), comme le [3,5-Bis(Trifluorométhyl)phényl]methanol (N° CAS : 32707-89-4), associée à une MSA liquide (aux température opérationnelles) comme le [(Trifluorométhyl)phényl]méthanol (N° CAS : 349-75-7). Dans ce cas la MSA1 sous forme liquide à une double fonction de MSA et de fluidifiant/diluant. La proportion relative volumique de ces composés l'un par rapport à l'autre peut varier, mais est avantageusement comprise dans un rapport allant de 30/70 à 60/40 volume/volume (v/v). De préférence ce rapport est d'environ 40/60 en v/v en particulier pour la combinaison MSA1/MSA2.

### Composés MSA - amide

Un tel composé est avantageusement choisi dans le groupe des aromatiques fluorés et à fonction amide et leurs dérivés. Le composé MSA de formule B peut également être un composé amide. Dans ce cas le radical X dans la formule B, est : 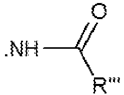 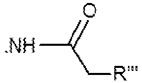 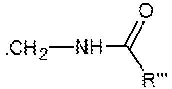 où R"' est tel que décrit précédemment.
De préférence l'amide est de formule : 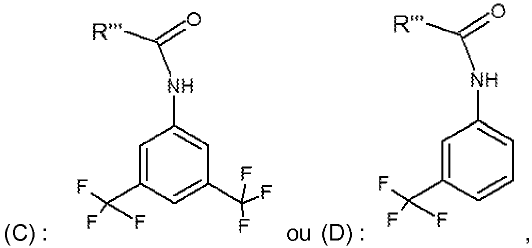 dans laquelle R"' est choisi parmi les radicaux suivants :
- -CₘH₂ₘ₊₁ avec m ≤ 20, de préférence ≤ 15 où m est un entier,
- -CₘH₂ₘ₋₁ avec 3 ≤ m ≤ 20, où m est un entier,
- et un radical aryle de formule b :

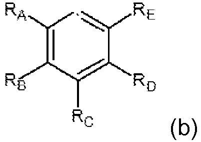

dans laquelle au moins un quelconque des radicaux R_{A}, R_{B}, R_{C}, R_{D} et R_{E}, identiques ou différents, est un atome halogène ou un groupement électro-attracteurs, en particulier un radical halogéné, du groupe suivant :
   - F, Cl, Br,
   - CₘF₂ₘ₊₁ avec m ≤ 4, où m est un entier non nul,
   - CF₂CF₂CₚH₂ₚ₊₁ avec p ≤ 4, où p est un entier,
   - CF₂CₚH₂ₚ₊₁ avec p ≤ 4, où p est un entier,
   - CH₂CₚF₂ₚ₊₁ avec p ≤ 4, où p est un entier,
   - OCH₂CF₃,
   - C(=O)CF₃,
   - CₘHₙFₚCl_{q}Brₛ avec m ≤ 4, où n, p, q, s sont des entiers dont au moins p, q ou s est non nul,
   - C(=O)OCₘH₂ₘ₊₁ avec m ≤ 4, où m est un entier, et
   - C(=O)CₘH₂ₘ₊₁ avec m ≤ 4, où m est un entier,
le ou les radicaux R_{A}, R_{B}, R_{C}, R_{D} et R_{E} restant(s) sont choisis, identiques ou différents, parmi les radicaux non électro-attracteurs suivants :
   - H,
   - CH₃,
   - CH₂CH₃,
   - CH₂CH₂CₚF₂ₚ₊₁ avec p ≤ 4, où p est un entier,
   - CₘH₂ₘ₋₁ avec 3 ≤ m ≤ 10, où m est un entier, et
   - CₘH₂ₘ₊₁ avec 3 ≤ m ≤ 10, où m est un entier,
où un seul des radicaux R_{A} à R_{E} peut être un de ces deux derniers radicaux CₘH₂ₘ₋₁ et CₘH₂ₘ₊₁.

De préférence le radical R"' est une chaine alkyle, linéaire ou non, et en particulier un radical n-C₇H₁₅, n-C₉H₁₉, n-C₁₁H₂₃ ou n-C₁₃H₂₇.

Ces composés de type amide sont particulièrement adaptés au procédé d'extraction liquide liquide à régénération thermique selon l'invention. D'autres composés de ce type qui peuvent être utilisés en tant que MSA pour des compositions d'extraction selon l'invention sont par exemple :
le N-[3,5-Bis(trifluorométhyl)phényl]acétamide (N° CAS 16143-84-3),
le N-[3,5-Bis(trifluorométhyl)phényl]-2-chloroacétamide (N° CAS 790-75-0),
le N-[3,5-Bis(trifluorométhyl)phényl]-2-bromoacétamide (N° CAS 99468-72-1),
le N-[3,5-Bis(trifluorométhyl)phényl]-2-chlorobenzamide (N° CAS 56661-47-3),
le N-[3,5-Bis(trifluorométhyl)phényl]-4-chlorobenzamide (N° CAS 56661-30-4),
le N-[3,5-Bis(trifluorométhyl)phényl]-4-bromobenzamide (N° CAS 56661-31-5),
le N-[3,5-dichlorophényl]acétamide (N° CAS 31592-84-4),
le N-[4-méthyl-3,5-dichlorophényl]acétamide (N° CAS 39182-94-0),
le N-[3-fluoro-5-(trifluorométhyl)phényl]acétamide (N° CAS 402-02-8),
le N-[2-fluoro-5-(trifluorométhyl)phényl]acétamide (N° CAS 349-27-9),
le N-[4-chloro-3-(trifluorométhyl)phényl]acétamide (N° CAS 348-90-3),
le N-[4-bromo-3-(trifluorométhyl)phényl]acétamide (N° CAS 41513-05-7),
le N-[2,5-difluoro-3-(trifluorométhyl)phényl]acétamide (N° CAS 1994-23-6),
le N-[3-(trifluorométhyl)phényl]acétamide (N° CAS 351-36-0),
le N-[2-méthyl-3-(trifluorométhyl)phényl]acétamide (N° CAS 546434-38-2),
le N-[2-amino-3-(trifluorométhyl)phényl]acétamide (N° CAS 1579-89-1),
le N-[3-(trifluorométhyl)phényl]-2,2,2-trifluoroacétamide (N° CAS 2946-73-8),
le N-[3-(trifluorométhyl)phényl]-2,2-dichloroacétamide (N° CAS 2837-61-8),
le N-[3-(trifluorométhyl)phényl]-2,2,2-trichloroacétamide (N° CAS 1939-29-3),
le N-[4-chloro-3-(trifluorométhyl)phényl]-2,2,2-trichloroacétamide (N° CAS 13692-04-1),
le N-[3-(trifluorométhyl)phényl]-2-bromoacétamide (N° CAS 25625-57-4),
le N-[3-(trifluorméthyl) phényl]propanamide (N° CAS 2300-88-1),
le N-[2-chloro-5-(trifluorométhyl)phényl]propanamide (N° CAS 721-57-3),
le N-[3-(trifluorométhyl)phényl](2,2-diméthyl-propanamide) (N° CAS 1939-19-1),
le N-[2-methyl-3-(trifluorométhyl)phényl](2,2-diméthyl-propanamide) (N° CAS 150783-50-9),
le N-[4-chloro-2-methyl-3-(trifluorométhyl)phényl](2,2-diméthyl-propanamide) (N° CAS 112641-23-3),
le N-[3-(trifluorométhyl)phényl](2-chloro-propanamide) (N° CAS 36040-85-4),
le N-[3-(trifluorométhyl)phényl]butanamide (N° CAS 2339-19-7),
le N-[3-(trifluorométhyl) phényl]isobutanamide (N° CAS 1939-27-1),
le N-[3-(Trifluorométhyl)phényl]cyclopentanecarboxamide.(N° CAS 13691-84-4),
le N-[3-(trifluorométhyl)phényl](2-méthyl-pentanamide) (N° CAS 1939-26-0),
le N-[3-(trifluorométhyl)phényl](2,2-Diméthyl-pentanamide) (N° CAS 2300-87-0),
le N-[3-(trifluorométhyl)phényl](2-(4-Bromophényl)-acétamide) (N° CAS 349420-02-6),
le N-[3-(Trifluorométhyl)phényl]-1-adamantanecarboxamide (N° CAS 42600-84-0),
le N-[2-chloro-5-(trifluorométhyl)phényl]octanamide (N° CAS 4456-59-1).

Ces molécules, employées en tant que MSA, par leur intégration dans une formulation combinant au moins un MEC et éventuellement un fluidifiant, permettent l'extraction d'espèces ioniques et en particulier de sels hydrophiles de l'eau vers la phase organique extractante. Un MSA particulièrement apte à être utilisé dans un procédé d'extraction selon l'invention est une molécule de formule 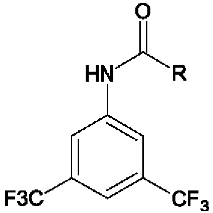 dans laquelle R = n-C₇H₁₅, n-C₉H₁₉, n-C₁₁H₂₃ ou n-C₁₃H₂₇, appelés respectivement MSA9 ; MSA10, MSA11 et MSA12.

Par sel hydrophile, on entend un sel soluble dans l'eau à plus de 1 g/Litre à 20°C, plus particulièrement à plus de 20 g/L à 20°C, et de façon avantageuse à plus de 100 g/L d'eau à 20°C.

### FLUIDIFIANT

Certains des MEC et des MSA étant des composés solides ou visqueux aux températures de fonctionnement du procédé d'extraction, l'utilisation d'un fluidifiant est alors avantageuse. Comme, le procédé selon l'invention permet notamment d'extraire des concentrations relativement élevées de sels, identifier un fluidifiant à même de dissoudre au moins 0,1 mol/L de MEC et de MSA, cumulés, doit être identifié. En effet, les solvants classiques tels que l'acétone, l'éthyle acétate, l'heptane, le diméthyl formamide, le nitrométhane, le méthanol, l'éthanol, le di-éthyle éther ou l'acétonitrile par exemple ne solubilisent pas à ces niveaux de concentration nombre de MEC connus et en particulier les macrocycles en cycle de 16 à 32 atomes décrits ci-dessus.

Par contre, il apparait que des solvants ou diluants tels que le dichlorométhane et plus particulièrement des solvants aromatiques polaires ont cette capacité d'être de bons candidats en tant que solubilisant pour cette application. Cela peut être expliqué par la nature semblable des MSA, eux même en général des composés aromatiques. Par exemple, le 1,3-bis(trifluorométhyl)benzène (n° CAS : 402-31-3) et plus préférentiellement le benzyle benzoate (n° CAS : 120-51-4) composés de deux cycles aromatiques répondent à ce critère de solubilisation sur des formulations exemplifiées. La présence d'au moins un groupement électro-attracteur de type trifluorométhyle ou chlorure sur un aromatique ou 2 cycles aromatiques permettent d'obtenir des composés fluidifiants particulièrement avantageux. Les composés de type dichlorobenzène (par exemple le 1,2-dichlorobenzène (n° CAS : 95-50-1)) et de type dichlorotoluène (par exemple le 2,4-dichlorotoluène (n° CAS : 95-73-8)), leurs dérivés et leurs mélanges sont des diluants particulièrement adaptés à la dilution des MEC selon l'invention. Par dérivés on entend des composés aromatiques substitués par le groupement trifluorométhyle sus-cité, comme par exemple, un solvant à groupements mixtes tel que le 2,4-dichloro-(trifluoromethyl)benzene (n° CAS : 320-60-5), mais également des composés di-aromatique tels que le diphényl-ether (CAS n° 101-84-8).

Il est également possible de choisir une MSA de telle manière qu'elle combine les fonctions de MSA et de diluant de la MEC et/ou d'autres MSA.

Selon un aspect préférentiel de l'invention, la composition est constituée seulement des composés MSA et MEC, et éventuellement en association avec un composé fluidifiant constituant ainsi une composition constituée de MSA et MEC et d'un composé fluidifiant.

Un autre objet de l'invention concerne l'utilisation de ces composés MSA et en particulier MSA amides pour l'extraction de sels et/ou d'ions d'un milieu aqueux. En particulier ces composés peuvent être utilisés, individuellement ou en mélange, dans une composition ou dans un procédé selon l'invention tels que décrits dans la présente demande.

### Concentration de MSA dans la composition liquide organique

Selon un aspect préféré de l'invention la concentration molaire de MSA (ou d'un mélange de tels composés) dans la composition selon l'invention est au moins égale à 0,1 M. De préférence cette composition est plus élevée, et est au moins égale à 1 M de manière à permettre une extraction optimisée en particulier des anions hydrophiles. Selon l'efficacité de solvatation anionique du MSA choisi, elle peut également être au moins égale à 2 M, avantageusement au moins égale à 3 M, par exemple au moins égale à 4 M. La concentration de MSA à retenir est dépendante de l'efficacité de celui-ci en tant que solvatant d'anions. Un excès de MSA n'améliorant pas la performance d'extraction n'a pas d'intérêt. De même un manque de fluidité de la composition d'extraction en raison d'une forte concentration de MSA n'est pas non plus optimal. Dans certaines variantes de l'invention, le MSA, ou un mélange de MSA, peut être utilisé pur sous sa forme liquide (concentration molaire de 7,32 M pour le [(Trifluorométhyl)phényl]méthanol (N° CAS : 349-75-7) ou 6,41 M pour le 3,5-bis(trifluoromethyl)aniline (N° CAS : 328-74-5). La concentration de MSA finalement retenue est dépendante de l'application visée et du cout relatif entre MSA et fluidifiant pour l'obtention de la meilleure solution technico-économique de déionisation de l'eau.

### Densité, solubilité et viscosité

Selon un aspect avantageux de l'invention, le MSA permettant la solvatation d'anions, dans la composition liquide organique, et particulièrement la composition liquide organique extraite, d'au moins un anion, a une solubilité à l'eau, sous sa forme libre ou complexée, inférieure à 0,1 Mol/L, de préférence inférieure à 0,01 Mol/L, de préférence inférieure à 0,0001 Mol/L et plus particulièrement inférieure à 1x10⁻⁵ Mol/L.

Selon un autre aspect avantageux de l'invention, le MSA d'au moins un anion extrait présente une densité supérieure à 1 kg/Litre, avantageusement supérieure à 1,1 kg/Litre, idéalement supérieure à 1,2 kg/Litre. Ce choix de conception est intimement lié au choix du fluidifiant qui par une densité plus élevée peut compenser un manque de densité du MSA.

Selon encore un autre aspect avantageux de l'invention, le MSA liquide ou le mélange MSA + fluidifiant présente une viscosité à 25 °C de moins de 100 mPa.s, de préférence de moins de 50 mPa.s, par exemple inférieure à 20 mPa.s.

### Concentration relative de MSA et de MEC dans la composition liquide organique

Pour assurer une extraction maximum des espèces ioniques, les concentrations de MSA et MEC sont choisies en fonction de la concentration dans la solution aqueuse des espèces ioniques à extraire. Par solution aqueuse on entend un liquide comprenant plus de 50% en moles d'eau.

Ainsi à iso-volume d'eau salée et de formulation d'extraction, la concentration en composé MEC est avantageusement équimolaire ou supérieure à la concentration du cation à extraire. Une concentration environs deux fois supérieure constituant généralement une limite au-delà de laquelle l'extraction des cations n'est pas substantiellement améliorée. La concentration en MEC effectivement retenue est principalement limitée par la capacité de solubilisation du MEC dans le MSA seul ou le mélange MSA+fluidifiant et/ou par la viscosité de la formulation globale obtenue et/ou par l'optimum du bilan technico-économique global.

De manière surprenante une concentration molaire de MSA bien supérieure à celle de l'anion à extraire peut être requise pour effectuer une extraction optimisée. Ainsi au moins le double, de préférence le triple, voire le quadruple, le quintuple ou le sextuple, voire plus, de la concentration de l'anion à extraire peut-être nécessaire pour obtenir des résultats satisfaisants, en particulier lorsque l'anion est l'anion chlorure. La concentration en MSA effectivement retenue est principalement limitée par la capacité de solubilisation du MSA dans le mélange MEC+fluidifiant et/ou par la viscosité de la formulation globale obtenue et/ou par l'optimum du bilan technico-économique global.

Ainsi la proportion relative molaire de MSA/MEC d'une composition selon l'invention pour extraire un sel constitué d'un anion et d'un cation est avantageusement supérieure ou égale à 1, 2, 3, 4, 5 ou 6. Le choix de la proportion relative molaire MSA/MEC à retenir pour une application industrielle est dépendant du cout relatif de ces composés, des données technico-économiques du projet et de l'activité de solvatation des anions du MSA choisi. De préférence cette proportion est au moins égale à 4 pour un MSA Alcool et comprise entre 1 et 4 pour un MSAAmide.

Les concentrations en MEC donnés dans les exemples sont relatives au volume du mélange MSA+fluidifiant et ne prennent donc pas en compte l'augmentation de volume de la formulation globale occasionnée par la dilution d'une macromolécule comme ces MEC. La concentration réelle en MEC est donc en générale inférieure de 10 à 25%, sans que cette plage soit limitante.

### Utilisation de la composition selon l'invention

La composition selon l'invention peut être avantageusement utilisée pour extraire des ions (cations, anions) hydrophiles d'une phase aqueuse. Il convient de noter que cette extraction des ions n'est pas compensée par le transfert d'espèces chimiques, ioniques ou autre, de la phase organique vers la phase aqueuse ou inversement. Cette composition est particulièrement adaptée à l'extraction d'espèces ioniques de manière sélective d'une solution aqueuse comprenant plusieurs sels et/ou espèces ioniques. Ainsi elle est particulièrement adaptée à l'extraction sélective d'au moins une espèce cationique non alcaline d'une solution saline aqueuse.

### Anions et cations à extraire

Les composés MEC et MSA compris dans la composition selon l'invention sont des composés permettant l'extraction et la solvatation d'au moins deux, et de préférence plusieurs, espèces ioniques. Les deux espèces ioniques peuvent notamment constituer un ou plusieurs sels hydrophiles. Selon un objet de l'invention les MEC et MSA sont choisis de manière à pouvoir extraire plus d'un sel, et de préférence plusieurs sels d'une solution saline les contenant. De préférence ces sels comprennent ou sont des sels de chlorures. Selon un autre objet de de l'invention ces ions sont les constituants, par exemple, d'un ou de plusieurs sels alcalinoterreux ainsi que des sels de certains métaux, comme des sels de Cadnium Cd²⁺, de plomb Pb²⁺ ou d'argent Ag^{+.}

Par « sel » on entend un composé ionique composé de cations et d'anions formant un produit neutre et sans charge nette. Ces ions peuvent être aussi bien inorganiques (chlorure Cl⁻, calcium Ca⁺⁺...), qu'organiques (acétate CH₃-COO⁻, ammonium R₃NH⁺...) et monoatomiques (fluorure F⁻, magnésium Mg²⁺...) aussi bien que polyatomiques (nitrates NO₃⁻, hydrogénocarbonate HCO₃⁻, sulfate SO₄²⁻...).

De manière particulièrement préférée les compositions comprenant un mélange de MEC et de MSA, avec ou sans fluidifiant, selon l'invention peuvent extraire d'une solution comprenant :
au moins une espèce cationique de métal alcalin,
au moins une espèce cationique non alcaline, en particulier divalente et,
au moins une espèce anionique complémentaire,
une quantité bien plus importante de ladite espèce cationique non-alcaline que de celle de l'espèce cationique de métal alcalin. Alternativement ou additionnellement la quantité d'espèce cationique de métaux alcalins extraite par cette composition est très faible.

Par « quantité relative bien plus importante » et « extraction très faible » il est entendu que le taux d'extraction (en pourcentage molaire) du ou des cations à extraire est au moins 2 fois plus important que le taux d'extraction des cations alcalins de la solution aqueuse traitée. Ce rapport peu avantageusement être d'au moins 5, voire de plus de 10. Certaines compositions selon l'invention permettent d'atteindre des rapports de 13 à iso concentration initial de cations à extraire et à ne pas extraire, voire d'extraire la totalité des ions à extraire (par exemple Ca) tout en n'extrayant quasiment pas de cations alcalins (par exemple Na), surtout lorsque les cations alcalins sont très majoritaires.

Le ou les cations à extraire sont de préférence choisis dans le groupe des métaux alcalino-terreux, et plus particulièrement le Calcium, le Strontium et/ou le Baryum. L'extraction de tels cations divalents et en particulier le Calcium le plus couramment présent dans l'eau, permet d'éviter des phénomènes d'entartrage par combinaison de celui-ci avec des anions spécifiques.

Un métal alcalin est un élément chimique de la première colonne (groupe 1, excepté l'hydrogène) du tableau périodique des éléments. Le lithium, le sodium, le potassium, le rubidium, le césium et le francium sont des métaux alcalins. Ils sont mono charge +.

L'extraction des sels de cations alcalino-terreux se fait par une complexation du MEC pour ce cation et par un suivi d'anions de la phase aqueuse vers la phase organique afin d'assurer une neutralisation des charges +/-.

Les anions suiveurs, solvatés par les MSA sont en priorité les anions les moins hydrophiles, c'est-à-dire les anions qui ont l'énergie libre d'hydratation la plus élevée. Ainsi, l'ordre préférentiel d'extraction d'anions courant de la phase aqueuse vers les formulations organiques selon l'invention sont : BF₄⁻, I⁻, Br⁻, NO₃⁻, Cl⁻, HCO₃⁻, CH₃COO⁻, F-, SO₄²⁻, CO₃²⁻. Ainsi, dans le cas de sels alcalino-terreux extraits seront prioritairement des sels d'iodure, de bromure, de nitrate et/ou de chlorures. Ces sels étant très solubles dans l'eau, même à température d'eau élevée (le CaCl₂ est soluble dans l'eau à plus de 40% poids), ils peuvent être rendus en tant que saumure concentrée pendant l'étape de régénération en température du solvant. Les sels alcalino-terreux ou métalliques extraits selon l'invention permettent ainsi de séparer les cations des anions à l'origine du tartre et potentiellement constitutifs de sels entartrant pour les rendre dans deux effluents aqueux distinctes. Les eaux partiellement déionisées selon l'invention sont alors constituées des anions les plus hydrophiles, c'est-à-dire les fluorures, les sulfates et les carbonates et des cations alcalins non extrait. Cette eau a donc perdu toute capacité d'être entartrante. Elle est adoucie. C'est d'ailleurs également le cas pour l'eau issue de la régénération thermique du procédé suivant l'invention qui est principalement constituée de sels de chlorures alcalino-terreux et métalliques. Ainsi, l'objectif de l'invention est d'être à même d'effacer la barrière du tartre de nombre d'applications industrielles en évitant la présence combinée dans un même effluent de cations et d'anions qui combinés, sont insolubles ou faiblement solubles à l'eau. Les sels à séparer sont donc principalement les sels de carbonates (MgCO₃, CaCO₃, SrCO₃, BaCO₃, CdCO₃, CoCO₃, MnCO₃, PbCO₃, NiCO₃, FeCO₃, ZnCO₃..), les sels de sulfates (CaSO₄, SrSO₄, BaSO₄, PbSO₄...) et les sels de fluorures (MgF₂, CaF₂, SrF₂, BaF₂, CdF₂, FeF₂, PbF₂...). Le contrôle de la précipitation des sels d'hydroxydes métalliques (Mg(OH)₂, Ca(OH)₂, Cd(OH)₂, Co(OH)₂, Fe(OH)₂, Ni(OH)₂, Zn(OH)₂...) est maitrisés par un ajustement du pH de l'eau ou par un relargage des cations divalent extraits vers une eau de pH neutre voire légèrement acide.

Les cations qui sont extraits de manière préférés selon l'invention sont le Ca²⁺, le Sr²⁺, le Ba²⁺, le Pb²⁺, le Cd²⁺ et l'argent Ag⁺. Cette liste n'étant pas exhaustive du côté des métaux de transition.

Aussi les compositions selon l'invention peuvent être utilisées dans des méthodes selon l'invention pour extraire dans une phase organique le Ca⁺⁺, le Sr⁺⁺ et/ou le Ba⁺⁺.

Pour les anions plus hydrophobes tels que les perchlorates ClO₄⁻, les permanganates MnO₄⁻, les picrates, de plus faibles concentrations de MSA suffisent pour effectuer leur transfert vers la phase organique en combinaison avec au moins un cation extrait par un MEC.

La composition selon l'invention est donc particulièrement apte à être utilisée dans un procédé d'extraction telle que décrite dans la présente demande et en particulier un procédé de déionisation de l'eau par extraction liquide-liquide à régénération thermique.
Selon un mode de réalisation préféré la composition ne comprend pas de MEC permettant l'extraction de chlorure de sodium, c'est-à-dire dont la constante de complexation du sodium dans le méthanol à 25°C, Log K(Na⁺) est supérieure à 3.
Selon un aspect particulier de l'invention, les sels de chlorure de magnésium ne sont que peu ou pas extraits du fait de la mise en œuvre de MEC dont la constante de complexation du magnésium dans le méthanol à 25°C, Log K(Mg²⁺) est inférieure à 3.

### PROCÉDÉ D'EXTRACTION LIQUIDE-LIQUIDE

L'invention concerne également un procédé d'extraction liquide-liquide d'une espèce cationique non alcaline d'une solution aqueuse liquide saline, ladite solution aqueuse liquide saline comprenant au moins une espèce cationique non-alcaline, une espèce cationique d'un métal alcalin, et une espèce anionique complémentaire, ledit procédé comprenant les étapes suivantes :
a) le mélange dans un premier réacteur, à une première température, d'une phase organique hydrophobe liquide et de ladite solution aqueuse liquide saline, pour l'obtention subséquente d'une solution aqueuse liquide traitée et d'une phase organique liquide hydrophobe chargée en lesdites espèce cationique non-alcaline et espèce anionique complémentaire,
   ladite phase organique hydrophobe liquide comprenant une molécule extractante de ladite espèce cationique non-alcaline, une molécule solvatante de ladite espèce anionique complémentaire et, éventuellement, un fluidifiant ;
b) la séparation, d'une part, de la solution aqueuse liquide traitée et, d'autre part, de ladite phase organique liquide chargée en lesdites espèces cationique non-alcaline et anionique complémentaire;
ledit procédé étant caractérisé en ce que ladite molécule extractante de l'espèce cationique non alcaline est une MEC telle que décrite précédemment et que ladite molécule solvatante de l'espèce anionique complémentaire est une MSA avantageusement telle que décrite précédemment, en particulier une MSA de type amide

De préférence on procède à une étape subséquente c) dans laquelle on mélange, à une deuxième température de préférence supérieure à la première, en phase liquide, dans un deuxième réacteur, ladite phase organique liquide chargée en lesdites espèces cationiques non-alcalines et anioniques complémentaires, et une solution aqueuse liquide de régénération, pour l'obtention subséquente d'une phase organique liquide régénérée et d'une solution aqueuse liquide de régénération chargée en lesdites espèces cationiques non-alcalines et anioniques complémentaires, la différence entre lesdites première et deuxième températures variant de 30 °C à 150 °C, préférentiellement variant de 50°C à 100°C.

Le terme de « cation non-alcalin » ou « d'espèce cationique non-alcaline » vise à exclure les cations provenant des métaux alcalins. De préférence les espèces cationiques non alcalines sont des cations divalents ; tels que les cations alcalinoterreux. Le procédé selon l'invention est particulièrement adapté à l'extraction d'un des cations suivants : calcium, strontium et baryum. Il peut également s'appliquer à des cations métalliques monovalents tels que l'argent Ag⁺, ou à des cations métalliques divalents tes que le plomb Pb²⁺ et le cadmium Cd²⁺. Selon un aspect préféré de l'invention l'espèce cationique d'un métal alcalin est l'ion sodium Na⁺. Avantageusement celui-ci n'est que peu ou pas extrait de la solution saline.

Les sels de cations non-alcalins sont constitués des cations sus-cités et d'une espèce anionique, ou d'anions, complémentaire. L'expression « anionique complémentaire » indique que la charge de l'espèce anionique ou des espèces anioniques correspond à celle de l'espèce cationique et permet de la neutraliser en constituant ainsi un sel de charge neutre.

Les MEC et MSA, ainsi que l'éventuel fluidifiant, sont tels que décrits ci-dessus.

Le MSA est un composé hydrophobe, et protique, dont le pKa dans l'eau à 25 °C est d'au moins 9, de préférence d'au moins 10,5 et est préférentiellement inférieur au pKa de l'eau à 25°C, ou du moins inférieur à 15 à 25°C.

Le MEC peut également être un composé organique et hydrophobe présentant une constante de complexation de l'espèce cationique non-alcaline à extraire de valeur Log K, dans le méthanol à 25 C°, supérieure à 3 et inférieure à 11, de préférence supérieure à 5 et inférieure à 9. De plus dans le cas de MEC sélectifs pour l'extraction des espèces cationiques non-alcalines, il peut présenter une valeur de Log K, dans le méthanol à 25°C, inférieure à 5, de préférence inférieure à 3 pour les cations alcalins, et en particulier pour le sodium.

Le pKa (ou constante d'acidité) est défini par pKa = -log₁₀ Ka, où Ka est la constante de dissociation acide qui est mesurée de manière standard pour de tels pKa. La méthode de mesure standard recommandée pour des pKa élevés, basiques, est de préférence celle décrite par Popov et al, IUPAC - Guidelines for NMR measurements for determination of high and low pKa Pure Appl.Chem., Vol. 78, No3, pp 663_675, 2006.

K est la constante de complexation d'une MEC et d'un cation non-alcalin dans le méthanol, à 25°C, qui est mesuré selon la méthode standard de titration calorimétrique isotherme.

Selon un aspect particulier de l'invention l'espèce cationique non alcaline est extraite sélectivement par rapport à l'espèce cationique d'un métal alcalin. Cette sélection peut atteindre les niveaux précédemment décrits.

Contrairement à de nombreux procédés d'extraction d'ions déjà connus, le procédé selon l'invention n'est pas basé sur un changement de pH pour permettre soit l'absorption, soit le relargage des ions capturés, en particulier via une mobilité acido-basique de l'ion hydrogène H⁺. Ainsi un aspect préférentiel de l'invention est que le procédé ne comprend pas d'étape où le pH de la solution aqueuse liquide de régénération est significativement modifié, c'est-à-dire au-delà d'une variation de pH de +/- 2, par exemple de ± 1 par rapport à l'eau à traiter. Selon un aspect préférentiel de l'invention, le procédé ne comprend pas, lors de l'étape de régénération du solvant extracteur d'ions, l'ajout, l'emploi ou la présence de composés visant à modifier le pH de la solution aqueuse liquide de régénération, tels que des acides ou des bases, en particulier des acides inorganiques tels que des acides sulfuriques, chlorhydriques ou nitriques ou des bases telles que de la soude ou de la potasse.

De plus ce procédé permet avantageusement d'extraire de l'eau à traiter, au moins une espèce cationiques alcalinoterreuse ainsi que des espèces anioniques telles que les ions Br⁻ou Cl⁻. Il convient de noter que de telles espèces anioniques sont hydrophiles et particulièrement difficiles à extraire d'un milieu aqueux. Un aspect particulièrement avantageux du procédé selon l'invention est qu'il permet l'extraction d'une phase aqueuse de cations et notamment de cation de type Ca⁺⁺, et d'anions et particulièrement d'anions de type Cl⁻ de manière simultanée et pour des concentrations de sels extraits pouvant éventuellement dépasser le 0,1 Mol/L.

### ETAPE a)

L'étape de mélange a) de la solution aqueuse liquide saline et de la phase organique hydrophobe peut être effectuée par agitation des deux phases liquides, par exemple par agitation mécanique ou orbitalaire, par le développement d'écoulements fortement turbulents, et/ou par interpénétration verticale (colonne gravitationnelle statique ou agitée) lorsque ces deux phases sont de densités différentes. Le choix technologique associé à la mise en œuvre du procédé faisant l'objet de l'invention est dépendant des cinétiques de transfert de sels associés au procédé et des températures opératoires considérées.

Il peut être nécessaire de répéter ces étapes de mélange a) pour permettre la performance d'extraction en sels souhaitée. Dans ce cas, les réacteurs de mélange pourront voir les écoulements de la solution saline à traiter et de la phase organique évoluer à contre-courant pour une performance de déionisation maximale.

Il est également préféré que l'étape de mélange a) ne se fasse pas dans des conditions aboutissant à une microémulsion ou à une émulsion stable et que dans tous les cas le MSA choisi n'ait pas d'activité de type tensio-actif.

### ETAPE b)

L'étape b) de séparation des phases aqueuses et organiques peut avantageusement être une simple décantation gravitationnelle de la phase organique et de la phase aqueuse liquide. Cette décantation peut avoir lieu dans le réacteur où s'effectue le mélange. Alternativement la séparation peut être obtenue par l'application d'un moyen extérieur, par exemple, la centrifugation, éventuellement dans une centrifugeuse distincte du réacteur où a lieu le mélange des phases aqueuse et organique. Le temps de décantation des deux phases est un paramètre important du procédé par le volume de phase organique immobilisé. Aussi, un différentiel de densité entre phases liquides non miscibles de plus de 0,1 kg/L, voire de plus de 0,2 kg/L est préféré. La phase organique est alors avantageusement choisie comme ayant une densité plus élevée que la densité de l'eau à traiter, de l'eau traitée et de l'eau saline de régénération produite. Alternativement, la phase organique peut être choisie comme ayant une densité moins élevée que la densité de l'eau à traiter et de l'eau traitée. Dans ces deux cas, le différentiel de densité doit être suffisant pour permettre une décantation effective des deux phases lorsque ce type de mélange est utilisé. Dans ces deux cas, si un différentiel de densité entre les phases liquides non miscibles mises en œuvre dans le procédé est inférieur à 0,1 kg/L, il pourra être considéré la mise en œuvre d'un système de décantation par centrifugation qui est à même de séparer des phases liquide n'ayant que 0,05 kg/L d'écart en densité.

### ETAPE c)

Une fois les phases séparées, la phase organique liquide chargée en espèces ioniques est avantageusement dirigée vers un ou une série de second(s) réacteur(s) où, après avoir été réchauffée, elle est mise en contact avec de l'eau liquide, où eau de régénération à une deuxième température supérieure à la première. Cette régénération à l'eau « chaude » de la phase organique permet une désextraction des sels absorbés en étape a) d'autant plus efficace que l'eau de régénération est chaude. Cela permet ainsi d'abaisser le volume d'eau de régénération et/ou d'augmenter la productivité de la phase organique liquide et/ou de réduire le nombre de réacteurs de désorption mis en œuvre et/ou de produire une eau de régénération chargée en sels desextraits à forte concentration. A l'exception de la température, cette étape de mélange permettant la désextraction de sels c) peut être effectuée dans des conditions opérationnelles similaires à celles décrites pour l'étape de mélange a) qui permet l'extraction des sels. Cependant certaines des conditions, comme par exemple la pression, peuvent varier pour, par exemple, éviter une mise en ébullition de l'eau ou du fluidifiant. De plus, la réalisation de cette étape de régénération de la composition extractante à une température plus élevée impacte l'hydrodynamique des écoulements avec une viscosité de la phase organique diminuée ce qui favorise la décantation des phases ainsi que la cinétique de transfert de sel entre phases pouvant entrainer le choix d'une technologie autre que celle mise en place à l'étape a). L'eau ou la solution aqueuse liquide de régénération sera choisie pour être compatible aux sels desextraits, en particulier pour éviter tout problème d'entartrage, en particulier des échangeurs de chaleur de refroidissement de l'eau chaude issue de cette étape.

### TEMPÉRATURE

Selon un aspect avantageux de l'invention, l'étape a) est réalisée à température ambiante. Il est aussi avantageux que la solution liquide saline ne soit pas soumise à une étape de chauffage ou de refroidissement préalable. Alternativement, une étape de chauffage ou de refroidissement préalable peut avoir lieu. Dans ce cas il est préférable que la solution liquide saline ne soit pas chauffée ou refroidie de plus de 5 °C, avantageusement de plus de 2°C, par rapport à la solution liquide saline à traiter.

Selon un autre aspect avantageux de l'invention, la première température est à une température inférieure à 50°C et supérieure à 0°C. Cette température peut être choisie avantageusement dans des gammes allant de 10°C à 40°C, de préférence de 15 °C à 30 °C, et particulièrement de 19 à 26 °C (par exemple 25°C).

Par gamme de température allant de 10 °C à 50°C, on entend des températures de 10 °C, 11 °C, 12 °C, 13 °C, 14 °C, 15 °C, 16 °C, 17 °C, 18 °C, 19 °C, 20 °C, 21 °C, 22 °C, 23 °C, 24 °C, 25 °C, 26 °C, 27 °C, 28 °C, 29 °C, 30 °C, 31 °C, 32 °C, 33 °C, 34 °C, 35 °C, 36 °C, 37 °C, 38 °C, 39 °C, 40 °C, 41 °C, 42 °C, 43 °C, 44 °C, 45 °C, 46 °C, 47 °C, 48 °C, 49 °C ou de 50 °C.

Selon un autre aspect particulièrement avantageux de l'invention la deuxième température est une température supérieure à 60°C, de préférence supérieure à 85°C. Cette température peut être choisie dans des gammes allant de 60°C à 150°C, de préférence de 85°C à 125°C, et particulièrement de 90°C à 120°C (par exemple 95°C).

Par gamme de température allant de 60 °C à 150°C, on entend des températures de 60 °C, 61 °C, 62 °C, 63 °C, 64 °C, 65 °C, 66 °C, 67 °C, 68 °C, 69 °C, 70 °C, 71 °C, 72 °C, 73 °C, 74 °C, 75 °C, 76 °C, 77 °C, 78 °C, 79 °C, 80 °C, 81 °C, 82 °C, 83 °C, 84 °C, 85 °C, 86 °C, 87 °C, 88 °C, 89 °C, 90 °C, 91 °C, 92 °C, 93 °C, 94 °C, 95 °C, 96 °C, 97 °C, 98 °C, 99 °C, 100 °C, 101 °C, 102 °C, 103 °C, 104 °C, 105 °C, 106 °C, 107 °C, 108 °C, 109 °C, 110 °C, 111 °C, 112 °C, 113 °C, 114 °C, 115 °C, 116 °C, 117 °C, 118 °C, 119 °C, 120 °C, 122 °C, 124 °C, 125 °C, 126 °C, 127 °C, 128 °C, 129 °C, 130 °C, 131 °C, 132 °C, 133 °C, 134 °C, 135 °C, 136 °C, 137 °C, 138 °C, 139 °C, 140 °C, 141 °C, 142 °C, 143 °C, 144 °C, 145 °C, 146 °C, 147 °C, 148 °C, 149 °C ou de 150 °C.

Les premières et deuxièmes températures sont nécessairement choisies de manière à ce que le mélange reste à l'état liquide à la pression opératoire et que la performance technico-économique de l'invention soit maximale. Il est particulièrement avantageux que la différence entre ces températures, ΔT, soit choisie dans une gamme allant de 30 °C à 150 °C, de préférence de 50 °C à 100 °C. Par ΔT allant de 50 °C à 100°C, on entend un ΔT de 50 °C, 51 °C, 52 °C, 53 °C, 54 °C, 55 °C, 56 °C, 57 °C, 58 °C, 59 °C, 60 °C, 61 °C, 62 °C, 63 °C, 64 °C, 65 °C, 66 °C, 67 °C, 68 °C, 69 °C, 70 °C, 71 °C, 72 °C, 73 °C, 74 °C, 75 °C, 76 °C, 77 °C, 78 °C, 79 °C, 80 °C, 81 °C, 82 °C, 83 °C, 84 °C, 85 °C, 86 °C, 87 °C, 88 °C, 89 °C, 90 °C, 91 °C, 92 °C, 93 °C, 94 °C, 95 °C, 96 °C, 97 °C, 98 °C, 99 °C ou de 100 °C. Aussi, si la première température est de 20°C, la seconde température sera de plus de 50°C, avantageusement de plus de 70°C, par exemple 80°C.

Ainsi, le procédé de l'invention peut comprendre une première étape a) permettant le transfert d'espèces ioniques spécifiques, qui sont de préférence complémentaires, de la solution aqueuse liquide saline à traiter vers la phase organique, à température ambiante, suivie d'une étape c) permettant la régénération de la phase organique chargée en espèces ioniques, de préférence complémentaires, et qui a lieu à une température supérieure à la température ambiante mais relativement peu élevée pour être issue d'énergies renouvelables géothermales, solaires ou autres (par exemple inférieure à 150 °C).

Selon un aspect préféré du procédé, il comprend les étapes subséquentes de :
d) séparation de ladite phase organique liquide régénérée et de l'eau, ou de la solution aqueuse, liquide de régénération chargée en lesdites espèces ioniques qui sont de préférence complémentaires,
e) mise en contact thermique indirecte, par exemple par échangeur de chaleur, de ladite phase organique liquide chargée en espèces ioniques et de ladite phase organique liquide régénérée.

Selon un aspect particulier de l'invention, il est avantageux que le procédé comprenne des étapes de chauffage et/ou de refroidissement de :
- la phase organique chargée en espèces ioniques,
- la phase organique, en particulier régénérée, non chargée en espèces ioniques,
- de l'eau, ou de la solution aqueuse, de régénération, et
- de l'eau, ou de la solution aqueuse, de régénération chargée en espèces ioniques déchargées ;
qui précédent l'introduction de ces diverses phases ou eaux dans les premiers et seconds réacteurs.

De telles étapes de chauffage peuvent être effectuées en tout ou partie par des échanges de chaleurs entre au moins deux des diverses phases précitées (c'est-à-dire entre les phases organiques chargées et en particulier régénérée, non chargées en espèces ioniques, ou entre les phases aqueuse que sont l'eau, et une solution aqueuse, de régénération ou entre l'eau et une solution aqueuse, de régénération chargée en espèces ioniques déchargées).

En particulier le procédé selon l'invention comprend une étape de chauffage de l'eau, ou de la solution aqueuse, de régénération effectuée avant l'étape c) et/ou comprend une étape de chauffage de la phase organique chargée en espèces ioniques effectuée avant l'étape c).

La régénération à chaud de la composition extractante permet par exemple la réduction d'un facteur 2 du nombre d'étapes de régénération nécessaires avant le recyclage de celle-ci au sein du procédé. Cet avantage apparait être encore plus important lorsqu'il est mise en œuvre une résine à forts taux de chargement en MEC et donc en sel.

Augmenter la température de régénération permet de réduire le nombre d'étapes successives de mise en contact d'une eau distillée ou eau de régénération tout en permettant une désextraction plus grande de sels à chaque fois.

### PRESSION

Les étapes de mélange a) et/ou c) sont avantageusement réalisées à la pression atmosphérique d'environ 1 atm au niveau de la mer, ou sans application de moyens de pression autres que le poids des liquides présents dans le réacteur.

Si une pression est appliquée, celle-ci peut être positive ou négative. Une telle pression peut aller de 0,8 atm à 80 atmosphères, de préférence de 1 à 10 atm.

### UTILISATION D'EAU TRAITÉE

De manière avantageuse l'eau, ou la solution aqueuse, liquide de régénération utilisée à l'étape c) est issue de la solution aqueuse saline traitée obtenue à la sortie de l'étape a) après une traitement complémentaire permettant d'éviter tout risque d'entartrage au cours des étapes c), d) ou e). Alternativement elle peut être issue d'une source extérieure.

### COMPOSITION

La phase organique comprend, ou est essentiellement constituée, ou est constituée, de la composition selon l'invention qui est décrite dans la présente demande. Cette composition est particulièrement efficace pour mettre en œuvre ledit procédé. Des compositions particulièrement adaptées à la mise en oeuvre du procédé selon l'invention comprennent des compositions associant une MSA Amide associée à au moins un des composés de types MEC tel que décrit ci-dessus et éventuellement à un fluidifiant.

Dans la description de l'invention cette composition peut être également nommée « solvant » ou « résine liquide ».

### DISPOSITIF

L'invention porte également sur un dispositif d'extraction d'au moins une espèce cationique non-alcaline et d'au moins un anion complémentaire, présents dans une solution saline aqueuse liquide comprenant :
- un premier réacteur comprenant une phase ou composition organique hydrophobe liquide selon l'invention telle que décrite dans la présente demande.

Ce dispositif peut avantageusement comprendre :
- un premier réacteur comprenant ladite composition organique hydrophobe et liquide et éventuellement la solution aqueuse saline, à l'état liquide, pour l'obtention subséquente d'une solution saline aqueuse traitée et d'une phase organique liquide hydrophobe et chargée en lesdites espèces cationique non-alcaline et anionique complémentaire, ledit premier réacteur comprenant **en outre** des premiers moyens de mélange et des premiers moyens pour la séparation d'une part de ladite solution saline aqueuse traitée liquide et d'autre part de ladite phase organique liquide chargée,
- un deuxième réacteur comprenant une phase organique hydrophobe liquide chargée en au moins ladite espèce cationique non-alcaline et au moins d'un anion complémentaire neutralisant sa charge et d'une eau, ou solution aqueuse de régénération pour l'obtention subséquente d'une solution aqueuse liquide de régénération chargée desdites espèces ioniques et d'une phase organique régénérée, ledit deuxième réacteur comprenant des seconds moyens de mélange et des seconds moyens pour la séparation d'une part de ladite solution saline de régénération chargée en espèces ioniques et d'autre part de ladite phase organique régénérée;
- éventuellement des moyens de contrôle de la température dans ledit deuxième réacteur ;
- des moyens de communications permettant le transfert entre le premier et le second réacteur de :
   - ladite solution aqueuse liquide de régénération pouvant être extraite dudit premier réacteur
   - ladite phase organique hydrophobe liquide chargée extraite dudit premier réacteur
   - ladite phase organique hydrophobe liquide régénérée extraite dudit second réacteur
   - ladite eau de régénération liquide chargée en sels issus dudit second réacteur ; et,
- un échangeur thermique mettant en présence d'une part ladite phase organique hydrophobe liquide chargée extraite dudit premier réacteur et d'autre part ladite phase organique hydrophobe liquide régénérée extraite dudit second réacteur ; et éventuellement,
- un échangeur thermique mettant en présence d'une part ladite eau, ou solution aqueuse liquide, de régénération et d'autre part ladite eau de régénération liquide chargée en espèces ioniques complémentaires désextraites.

Selon un aspect particulier de l'invention, les réacteurs, et plus particulièrement les parties de ces réacteurs qui ne sont pas mobiles, ne sont pas en acier inoxydables.

Selon un autre aspect particulier de l'invention le premier et/ou les premiers réacteurs ne comprennent pas de moyens de chauffage (radiateurs) ou de refroidissement (réfrigérant).

Selon encore un autre aspect particulier de l'invention la phase organique présente dans le dispositif comprend, ou est essentiellement constituée, ou est constituée de la composition selon l'invention décrite dans la présente demande.

Le dispositif selon l'invention peut avantageusement être monté en série pour permettre des étapes de traitement successives de l'eau à traiter de manière à diminuer la teneur en espèce ionique de l'eau jusqu'à obtenir une eau pure et/ou purifiée de l'espèce ionique à extraire. Un tel dispositif est également couvert par la présente invention.

De même, le dispositif selon l'invention peut avantageusement être monté en série pour permettre des étapes de régénération successives de la phase organique hydrophobe liquide chargée en sel de manière à diminuer la teneur en espèce ionique de la résine jusqu'à obtenir une résine suffisamment purifiée des espèces ioniques extraites. Un tel dispositif est également couvert par la présente invention.
L'invention concerne également un procédé d'extraction liquide-liquide d'un sel ou d'un mélange de sels composés d'au moins un anion hydrophile, tel que le chlorure (cf exemple 1 et 2). Les cations extraits peuvent avoir un rayon ionique compris entre 55 pm et 180 pm, avantageusement entre 70 pm et 167 pm. De tels cations sont notamment des cations de lithium, de sodium, de potassium, de rubidium et de césium qui sont des cations monovalents ou des cations de calcium, de strontium ou de baryum qui sont des cations divalents, voire des cations de métaux de transition.

Ce procédé comprend les étapes suivantes :
i) le mélange dans un premier réacteur, à une première température, d'une phase organique hydrophobe liquide et de ladite solution aqueuse liquide saline, pour l'obtention subséquente d'une solution aqueuse liquide traitée et d'une phase organique hydrophobe liquide chargée en lesdites espèces cationiques et espèces anioniques complémentaires,
   ladite phase organique hydrophobe liquide comprenant une molécule extractante desdites espèces cationiques de type telle que décrite ci-dessus, une molécule solvatante de ladite espèce anionique complémentaire et, éventuellement, un fluidifiant ;
ii) la séparation, d'une part, de la solution aqueuse liquide traitée et, d'autre part, de ladite phase organique hydrophobe liquide chargée en lesdites espèces cationiques et anioniques complémentaires;
ledit procédé étant caractérisé en ce que ladite molécule extractante de l'espèce cationique est une MEC telle que décrite précédemment pour les macrocycles de 16 à 22 atomes, en particulier de carbone et que ladite molécule solvatante de l'espèce anionique complémentaire est une MSA avantageusement telle que décrite précédemment.

De manière avantageuse le procédé comprend une étape subséquente de régénération de la phase liquide organique hydrophobe pouvant être de même type que celle décrite précédemment. De manière avantageuse la température de régénération est comprise entre 60°C et 150°C, préférentiellement entre 90°C et 120°C.

Les composés et autres conditions du procédé peuvent avantageusement être celles décrites en référence avec le procédé d'extraction d'espèce cationique non-alcaline. De même l'invention porte sur un dispositif permettant la mise en oeuvre du procédé qui est substantiellement équivalente ou identique au dispositif décrit ci-dessus.

### DESCRIPTION DES FIGURES

L'invention sera mieux comprise à la lecture des figures annexées, qui sont fournies à titre d'exemples et ne présentent aucun caractère limitatif, dans lesquelles :

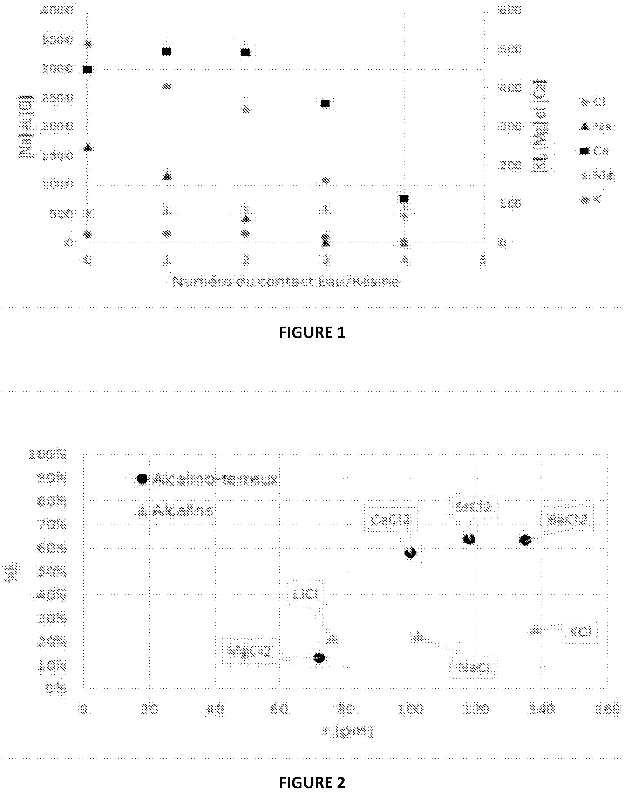

La figure 1 est un graphique présentant l'évolution de la concentration en mMol/L des cinq ions Na⁺, K⁺, Mg²⁺, Ca²⁺ et Cl⁻ d'une eau salée initialement à 180 g/L après 4 contacts en série avec une composition de 0,4Mol/L de MEC1 et de 1,2Mol/L de MSA9, le tout dissout dans du 1,2-dichlorobenzène selon l'invention, ou est attendu à chaque étape que soit atteint l'équilibre d'extraction avant de poursuivre à la suivante, comme décrit à l'exemple 2.
La figure 2 est un graphique présentant les taux d'extraction en % molaire, à température ambiante, de 7 sels, LiCl, NaCl, KCl, MgCl₂, CaCl₂, SrCl₂ et de BaCl₂, extraits individuellement d'une eau salée de concentration initiale 0,1Mol/L par utilisation d'une composition de 0,1Mol/L de MEC2 et de 3,5Mol/L de MSA2 le tout dilué dans du dichlorométhane selon l'invention, exprimés en fonction du rayon ionique du cation, comme décrite à l'exemple 3.

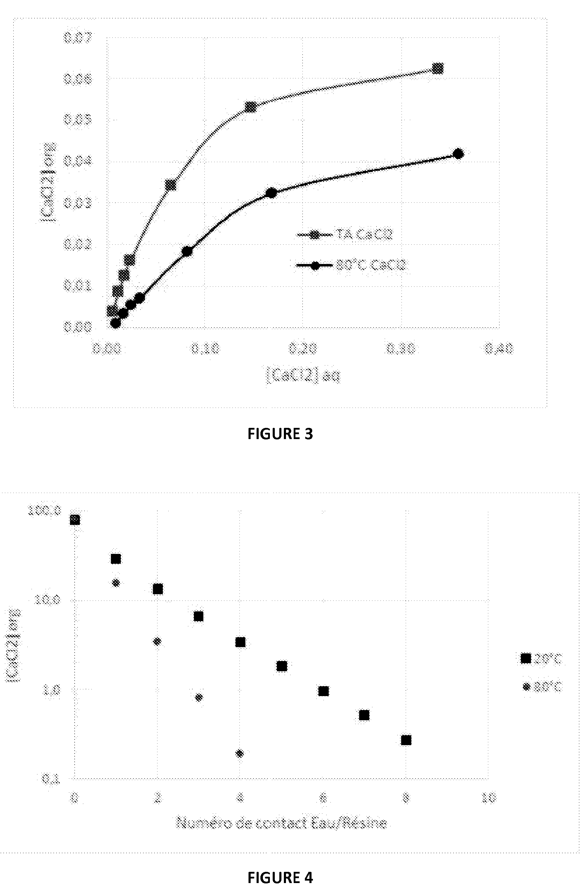

La figure 3 est un graphique présentant les isothermes d'absorption de CaCl₂ à température ambiante et à 80°C d'une composition de 0,1Mol/L de MEC2 et de 1Mol/L de MSA9, le tout dissout dans du 1,2-dichlorobenzène selon l'invention, comme décrit à l'exemple 4.
La figure 4 est un graphique présentant une comparaison de deux phases de régénération à 20°C et à 80°C d'une composition de 0,1 Mol/L de MEC2 et de 1Mol/L de MSA9, le tout dissout dans du 1,2-dichlorobenzène selon l'invention, qui a été chargée en CaCl₂ à hauteur de 80 mMol/L avant initiation de plusieurs phases successives de désextraction à l'eau distillée, comme décrit à l'exemple 5.

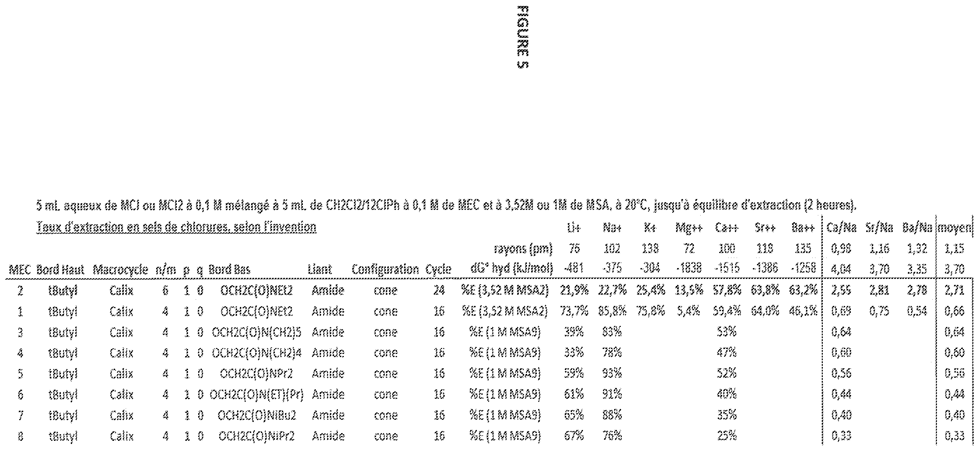

La figure 5 est un tableau présentant les taux d'extraction en % molaire, à température ambiante, de 7 sels, LiCl, NaCl, KCl, MgCl₂, CaCl₂, SrCl₂ et de BaCl₂, extraits individuellement d'une eau salée de concentration initiale 0,1Mol/L par utilisation d'une composition de 0,1Mol/L de MEC1 à MEC8 et de 3,5Mol/L de MSA2 pour les MEC1 et MEC2, ou du 1Mol/L de MSA9 pour les MEC3 à MEC8, le tout dilué dans du dichlorométhane pour les MEC1 et MEC2 ou dans du 1,2-dichlorbenzène pour les MEC3 à MEC8 selon l'invention, exprimés en fonction du rayon ionique du cation, comme décrite pour partie dans les exemples 1 et 3.

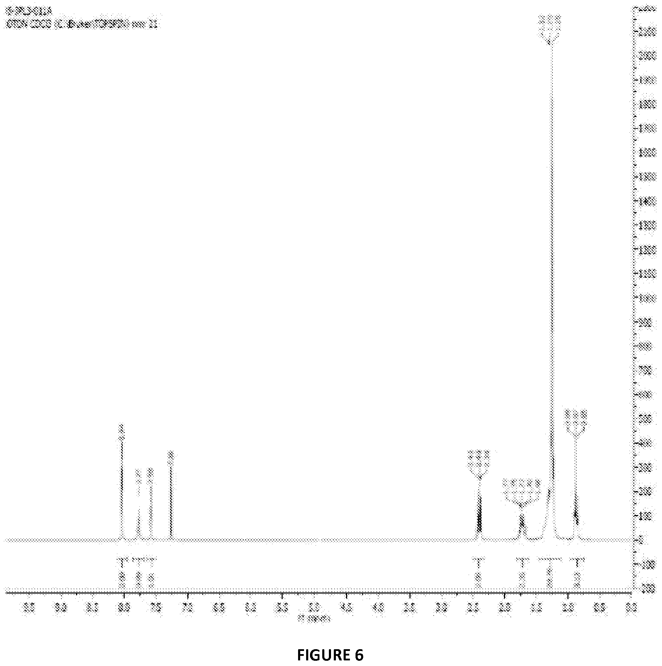

La figure 6 représente le Spectre RMN du composé MSA11.

### EXEMPLES

### Description des MEC utilisées dans la mise en œuvre de l'invention

Différentes compositions extractrices d'ions selon l'invention sont exemplifiées. Les 12 MEC utilisées dans ces compositions sont les suivantes :

| **Nom** | **Nomenclature** | **Formule développée** |
|---|---|---|
| **MEC 1** | 4-tert-butyl-Calix[4]arène tetrakis(N,N-diéthylacétamide), CAS n° 114155-16-7, C₆₈H₁₀₀N₄O₈, MW= 1101,5 g/mole, | 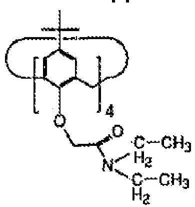 |
| | MP= 223-226°C, | |
| | Log K(Li⁺, MeOH, 25°C) = 4,0 | |
| | Log K(Na⁺, MeOH, 25°C) = 7,9 | |
| | Log K(K⁺, MeOH, 25°C) = 5,8 | |
| | Log K(Rb⁺, MeOH, 25°C) = 3,8 | |
| | Log K(Cs⁺, MeOH, 25°C) = 2,5 | |
| | Log K(Mg⁺⁺, MeOH, 25°C) < 1,2 | |
| | Log K(Ca⁺⁺, MeOH, 25°C) > 9,0 | |
| | Log K(Sr⁺⁺, MeOH, 25°C) > 9,0 | |
| | Log K(Ba⁺⁺, MeOH, 25°C) = 7,2 | |
| **MEC 2** | 4-tert-butyl-Calix[6]arène hexakis(N,N-diéthylacétamide), CAS n° 111786-95-9, C₁₀₂H₁₅₀N₆O₁₂, | 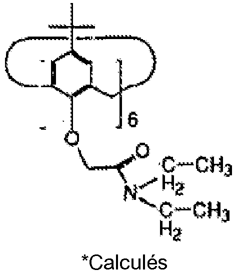 |
| | MW= 1650 g/mole, | |
| | Log K(Li⁺, MeOH, 25°C) = 2,6 | |
| | Log K(Na⁺, MeOH, 25°C) = 2,8 | |
| | Log K(K⁺, MeOH, 25°C) = 3,3 | |
| | Log K(Rb⁺, MeOH, 25°C) = 2,6 | |
| | Log K(Cs⁺, MeOH, 25°C) = 2,8 | |
| | Log K(Mg⁺⁺, MeOH, 25°C) = 1,3* | |
| | Log K(Ca⁺⁺, MeOH, 25°C) = 8,2* | |
| | Log K(Sr⁺⁺, MeOH, 25°C) = 8,1* | |
| | Log K(Ba⁺⁺, MeOH, 25°C) = 8,3* | |
| **MEC 3** | 4-tert-butyl-Calix[4]arène tetrakis(N-piperidinylacétamide), | 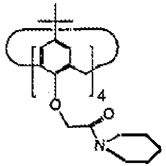 |
| | CAS n° 353236-41-6 | |
| | C₇₂H₁₀₀N₄O₈, MW= 1148,6 g/mole, | |
| | MP= 272-276°C | |
| **MEC 4** | 4-tert-butyl-Calix[4]arène tetrakis(N-pyrrolidinylacétamide), | 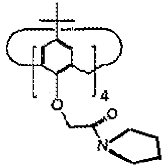 |
| | CAS n°133801-01-1 | |
| | C₆₈H₉₄N₄O₈, MW= 1094 g/mole, | |
| | Log K(Li⁺, MeOH, 25°C) = 3,0 | |
| | Log K(Na⁺, MeOH, 25°C) = 7,2 | |
| | Log K(K⁺, MeOH, 25°C) = 5,4 | |
| | Log K(Rb⁺, MeOH, 25°C) = 3,0 | |
| | Log K(Cs⁺, MeOH, 25°C) = 1,0 | |
| | Log K(Mg⁺⁺, MeOH, 25°C) = 1,2 | |
| | Log K(Ca⁺⁺, MeOH, 25°C) = 7,8 | |
| | Log K(Sr⁺⁺, MeOH, 25°C) = 8,1 | |
| | Log K(Ba⁺⁺, MeOH, 25°C) = 6,8 | |
| **MEC 5** | 4-tert-butyl-Calix[4]arène tetrakis(N,N-di-n-propylacétamide), | 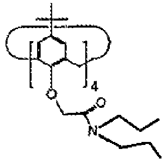 |
| | CAS n° 162714-60-5 | |
| | C₇₆H₁₁₆N₄O₈, MW= 1212,46 g/mole, | |
| | MP= 191-194°C | |
| **MEC 6** | 4-tert-butyl-Calix[4]arène tetrakis(N,N-éthyl-n-propylacétamide), | 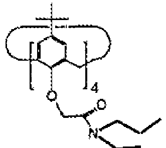 |
| | C₇₂H₁₀₈N₄O₈, MW= 1156 g/mole, | |
| **MEC 7** | 4-tert-butyl-Calix[4]arène tetrakis(N,N-di-iso-butylacétamide), | 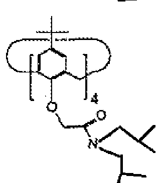 |
| | C₈₄H₁₃₂N₄O₈, MW= 1324,46 g/mole, | |
| | MP= 164-167°C | |
| **MEC 8** | 4-tert-butyl-Calix[4]arène tetrakis(N,N-di-iso-propylacétamide), | 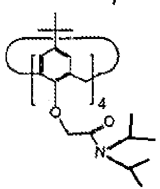 |
| | C₇₆H₁₁₆N₄O₈, MW= 1212 g/mole, | |
| **MEC 9** | 4-tert-butyl-Calix[8]arène octakis(N,N-diéthylacétamide), CAS n° 315191-66-1, C₁₃₆H₂₀₀N₈O₁₆, MW= 2100 g/mole, | 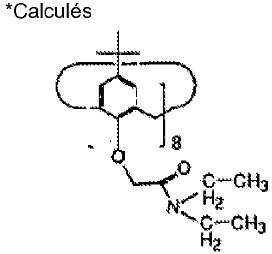 |
| | Log K(Li⁺, MeOH, 25°C) = 2,1* | |
| | Log K(Na⁺, MeOH, 25°C) = 2,2* | |
| | Log K(K⁺, MeOH, 25°C) = 2,2* | |
| | Log K(Rb⁺, MeOH, 25°C) = 1,9* | |
| | Log K(Cs⁺, MeOH, 25°C) = 2,0* | |
| | Log K(Mg⁺⁺, MeOH, 25°C) = 1,3* | |
| | Log K(Ca⁺⁺, MeOH, 25°C) = 7,2 | |
| | Log K(Sr⁺⁺, MeOH, 25°C) = 7,2* | |
| | Log K(Ba⁺⁺, MeOH, 25°C) = 8,6* | |
| **MEC 10** | 4-tert-Butylcalix[4]arene-tetraacetic acid tetraethyl ester, CAS n° 97600-5-8, C₆₀H₈₀O₁₂, MW= 993,27 g/mole, | 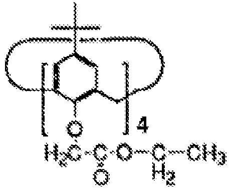 |
| | Log K(Li⁺, MeOH, 25°C) = 2,6 | |
| | Log K(Na⁺, MeOH, 25°C) = 5,0 | |
| | Log K(K⁺, MeOH, 25°C) = 2,4 | |
| | Log K(Rb⁺, MeOH, 25°C) = 3,1 | |
| | Log K(Cs⁺, MeOH, 25°C) = 2,7 | |
| **MEC 11** | 4-tert-Butylcalix[5]arene-pentaacetic acid pentaethyl ester, CAS n° 152495-34-6, C₇₅H₁₀₀O₁₅, MW= 993,27 g/mole, | 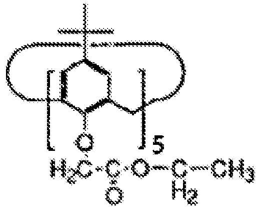 |
| | Log K(Li⁺, MeOH, 25°C) = 1,0 | |
| | Log K(Na⁺, MeOH, 25°C) = 4,4 | |
| | Log K(K⁺, MeOH, 25°C) = 5,3 | |
| | Log K(Rb⁺, MeOH, 25°C) = 5,6 | |
| | Log K(Cs⁺, MeOH, 25°C) = 5,5 | |
| **MEC 12** | 4-tert-Butylcalix[6]arene-hexaaacetic acid hexaethyl ester, CAS n° 92003-62-8, C₉₀H₁₂₀O₁₈, MW= 1489,93 g/mole, | 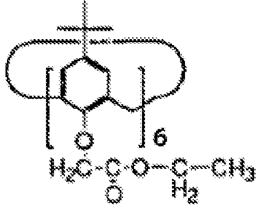 |

L'ensemble de ces MEC sont des solides totalement insolubles dans l'eau.

### Description générique des modes de réalisations exemplifiés

### Composition d'extraction

La composition d'extraction est obtenue en solubilisant une quantité de MEC et de MSA dans le fluidifiant choisi, du dichlorométhane CH₂Cl₂, un dichlorobenzène ou un dichlorotoluène ou tout autre fluidifiant à même de bien solubiliser le mélange MEC/MSA pour obtenir les concentrations finales recherchées après solubilisation des MEC et MSA dans un minimum de 3 millilitres de fluidifiant. Si le fluidifiant choisi est également un composé MSA alors le volume de MSA choisi est au minimum 3 millilitres. Les concentrations en MSA2 et MSA9 données sont relatives au volume de fluidifiant ajouté et les concentrations en MEC sont relatives au volume fluidifiant+MSA ajouté, La composition organique d'extraction est alors légèrement chauffée pour favoriser la solubilisation des composés organiques par pistolet à air chaud (température d'environ 50 à 60°C) pendant quelques secondes (10 à 30 secondes) jusqu'à obtention d'une solution limpide. La composition est alors mise au repos pendant 24 heures à température ambiante pour s'assurer de la stabilité de la formulation obtenue.

Ces formulations scellées sont ensuite mises en agitation orbitalaire à 500 tours/minute pendant 2 heures après avoir ajouté un volume équivalent d'eau distillée deux fois afin de permettre une saturation à l'eau de l'ensemble de la formulation et un contrôle de pH en entrée et en sortie (pH proche de 7, ou tout au moins maintenu après contact à l'eau de saturation).

La composition d'extraction est alors mise au repos pour décantation. Toutes les compositions sont stables et se décantent rapidement (quelques minutes au plus) en deux phases distinctes.

### Eau salée - saumure contenant notamment des sels à extraire

Une solution aqueuse du ou des sels de chlorure considérés (NaCl ou autres) est préparée à partir d'une eau distillée deux fois. Les sels de chlorures utilisés sont les suivants : LiCl, NaCl, KCI, MgCl₂, CaCl₂, SrCl₂ et BaCl₂.

### Extraction/Désextraction

3 mL de la composition organique d'extraction préparée sont alors prélevés en phase inférieure du mélange diphasique décanté et transvasés vers un flacon contenant 3 mL de l'eau contenant le ou les sel(s) de chlorure considéré(s) (NaCl ou autre), puis le flacon est scellé et mis sous agitation orbitalaire (à 500 tours par minutes), pendant 2 heures à température ambiante (TA) c'est-à-dire entre 20 et 25°C.

Pour le cas des essais d'extraction ou de désextraction à plus haute température, en particulier à 60°C ou à 80°C, une agitation magnétique (à 500 tours par minutes), pendant 2 heures, est réalisée avec un chauffage thermostaté indirect dans un moule métallique sur une plaque chauffante.

Il est vérifié que des gouttelettes de l'ordre de 1-2 mm sont bien présentes au cours de ces agitations pour être certain d'atteindre un équilibre dans la répartition du sel de chlorure considéré (NaCl ou autre) entre les deux phases liquides en fin d'agitation. L'aspect des phases organiques et aqueuses est limpide et incolore ou légèrement trouble.

Une fois les 2 heures d'agitation réalisées, l'agitation est arrêtée et l'ensemble est mis au repos pour décantation pendant environ 10 minutes, tout au moins jusqu'à séparation totale des deux phases, à la température de l'essai. Puis, la phase aqueuse supérieure est prélevée puis agitée et diluée pour analyse de sa salinité par une Chromatographie Ionique (dispositif de marque Metrohm^{™} intégrant une colonne d'analyse des cations et une colonne d'analyse des anions adaptées aux ions et à la concentration en sels recherchés). De même, la solution aqueuse initiale de sel de chlorure (NaCl ou autre) est également analysée par cette chromatographie ionique pour déterminer sa concentration relative molaire en cation et en chlorures avant extraction. Toutes les extractions et analyses ont étés dupliquées.

### Exemple 1 : Extractions à température ambiante de solutions salines en mono-sels avec le MEC1.

Dans cet exemple le MEC utilisé est le 4-tert-butyl-Calix[4]arène tetrakis(N,N-diéthylacétamide) (MEC1 de n° CAS : 114155-16-7).

Il a été synthétisé à partir du 4-tert-Butylcalix[4]arène de formule brute C₄₄H₅₆O₄ et de n° CAS 60705-62-6, acheté chez TCI Chemicals, selon la procédure de synthèse décrite dans la publication « Selective alkali and alkaline earth cation complexation by calixarene amides, New J.Chem, 1991,15,33-37 ».

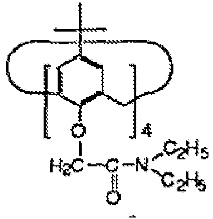

Le MSA utilisé est le MSA2 de n° CAS 32707-89-4, C₉H₆F₆O, MW= 244,13 g/mole, solide blanc qui est disponible chez plusieurs distributeurs. Ses caractéristiques sont les suivantes :

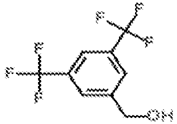

| **Paramètres** | **Valeurs** | **Unités** |
|---|---|---|
| Densité | (1,433) | kg/L |
| Viscosité | - | mPa.s |
| BP | 255 | °C |
| MP | 55 | °C |
| FP | 97 | °C |
| Log P | 3,0 (estimée) | - |
| Solubilité | 2,29 | mMole/L |
| pKa | 14,7 +/- 1 | - |

La composition extractante considérée comprend 0,1mol/L de MEC1 et 3,52 mol/L de MSA2 dans du dichlorométhane CH₂Cl₂ obtenue tel que précédemment décrit. La concentration initiale du sel considéré dans l'eau, que ce soit du LiCl, du NaCl, du KCI, du MgCl₂, du CaCl₂, du SrCl₂ ou du BaCl₂ , est de 0,1 mol/L.

Après réalisation de ces 7 extractions spécifiques (doublées) en sels, les quantités de cations extraits en pourcentage molaire relatifs avant et après extraction à température ambiante et à iso-volume eau/formulation extractante sont indiquées dans le tableau I :

**Tableau I**

| MEC1 | 0,1 M | Taux d'extraction à TA (Org./Eau = 1) | | | | | | |
|---|---|---|---|---|---|---|---|---|
| MSA2 | 3,52 M | LiCl | NaCl | KCI | MgCl₂ | CaCl₂ | SrCl₂ | BaCl₂ |
| Fluidifiant | CH₂Cl₂ | 73,7% | 85,8% | 75,8% | 5,4% | 59,4% | 64,0% | 46,1% |

L'extraction de cations a une saumure constituée d'un seul chlorure alcalin ou alcallino terreux varie donc de 5,4% à 85,8% suivant le cation. Dans ces solutions d'un seul sel, et pour ce MEC1, le niveau d'extraction des sels est très bon mise à part pour le magnésium, qui, avec ses 76 pm de rayon ionique et sa forte hydrophilie ne rentre pas dans l'enveloppe d'extraction de ce macrocycle à 16 carbones, encore trop grand. Cette formulation semble donc être bien adaptée à un dessalement massif d'une eau saline, voire d'une saumure (une eau de salinité supérieure à 50 g/Litre).

### Exemple 2 : Extraction de sels d'une saumure par emploi du MEC1.

La composition extractante est la suivante : 0,4 Mol/L du MEC1 (cf exemple 1, de n° CAS : 114155-16-7), complété de 1,2 Mol/L de MSA9 de formule : 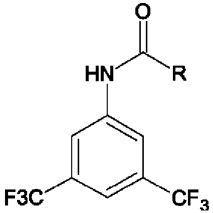 où R est le radical heptyle : n-C₇H₁₅.

Ce composé a été synthétisé par la méthode décrite à l'exemple 9 ci-dessous.

Le fluidifiant utilisé pour solubiliser ces deux composés est le 1,2-dichlorobenzène, de numéro CAS 95-50-1 acheté chez TCl-Chemicals et identifié par le sigle 12CIPh.

La saumure est une eau de forte salinité, à 180 g/Litre (soit 5,6 Mol/L), constituée des ions sodium, potassium, calcium, magnésium et chlorures dans les proportions du tableau II ci-dessous. L'eau saline à traiter a été contactée avec un volume relatif triple de cette composition extractante afin de se rapprocher des conditions opérationnelle.

Il est présenté dans le tableau II ci-dessous les concentrations en mMol/L d'eau de chacun des ions avant et après chacune des quatre étapes d'extraction, réalisées à température ambiante (TA).

**Tableau Il**

| MEC1 | 0,4 M | Evolutions de la salinité à TA, en mMol/Litre | | | | | | |
|---|---|---|---|---|---|---|---|---|
| MSA9 | 1,2 M | | Na | K | Mg | Ca | Cl | Total |
| Fluidifiant | 12CIPh | Initial | 1650 | 20,8 | 77,1 | 447 | 3432 | 5626 |
| Org./Eau | 3 | Extract1 | 1162 | 22,5 | 83,4 | 495 | 2703 | 4466 |
| | | Extract2 | 429 | 23,4 | 86,4 | 492 | 2292 | 3322 |
| | | Extract3 | 8,54 | 13,9 | 87,6 | 360 | 1083 | 1553 |
| | | Extract4 | 3,70 | 3,65 | 94,2 | 114 | 469 | 685 |
| Equivalent4 | | g/Litre | 0,09 | 0,14 | 2,29 | 4,57 | 16,62 | 23,70 |

Ces données sont illustrées par la figure 1. Il apparait clairement que le premier sel à être extrait est le NaCl, puis à partir de la troisième étape d'extraction, les chlorures de calcium et de potassium commencent à être extrait tandis que le NaCl poursuit sa baisse de concentration dans l'eau. Sans surprise, le magnésium n'est pas extrait. Au final, après 4 phases de contact et de mélange entre phases liquides, la salinité totale de l'eau est passée de 180 g/Litre à 23,7g/Litre. Une cinquième extraction aurait permis d'atteindre un dessalement total, au MgCl₂ près.

### Exemple 3 : Extractions à température ambiante de solutions salines en mono-sels avec le MEC2.

Cet exemple 3 est effectué dans les mêmes conditions que l'exemple 1 excepté que le MEC1 est remplacé par le MEC2.

Le MEC utilisé est le 4-tert-butyl-Calix[6]arène hexakis(N,N-diéthylacétamide (MEC2 de n° CAS : 111786-95-9).

Il a été synthétisé en interne à partir du 4-tert-Butylcalix[6]arène de formule brute C₆₆H₈₄O₆ et de n° CAS 78092-53-2, acheté chez TCI Chemicals, selon la procédure de synthèse décrite dans la publication « Selective Complexation and Membrane Transport of Guanidinium Salts by Calix[6]arene Amides », Israel J.Chem, 1992, 32, 79-87 ». 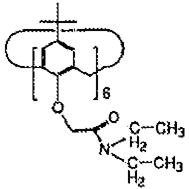 Le MSA utilisé est le MSA2 de n° CAS 32707-89-4, C₉H₆F₆O, MW= 244,13 g/mole, Solide blanc qui est disponible chez plusieurs distributeurs.

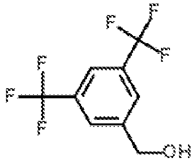

Après réalisation des 7 extractions spécifiques (doublées) en sels, les quantités de cations extraits en pourcentage molaire relatifs avant et après extraction à température ambiante et à iso-volume eau/formulation extractante sont indiquées dans le tableau III :

**Tableau III**

| MEC2 | 0,1 M | Taux d'extraction à TA (Org./Eau = 1) | | | | | | |
|---|---|---|---|---|---|---|---|---|
| MSA2 | 3,52 M | LiCl | NaCl | KCl | MgCl₂ | CaCl₂ | SrCl₂ | BaCl₂ |
| Fluidifiant | CH₂Cl₂ | 21,9% | 22,7% | 25,4% | 13,5% | 57,8% | 63,8% | 63,2% |

L'extraction de cations d'une saumure constituée d'un seul chlorure alcalin ou alcalino terreux varie donc de 13,5% à 63,8 % suivant le cation. Dans ces solutions d'un seul sel, les cations divalents sont extraits en quantité deux à trois fois plus grande que les cations monovalents, à l'exception de l'ion magnésium, Mg²⁺ beaucoup plus hydrophile et petit, qui est ici difficilement extrait comme l'illustre la figure 2.
La composition selon l'invention démontre donc une spécificité particulièrement intéressante de cette formulation pour de nombreuses applications industrielles où le Calcium, bien que plus hydrophile, que le Sodium (ΔG°hyd =-1515 kJ/mole contre -406 kJ/mole), malgré qu'ils soient de rayon ionique très proches (102 et 100 pm), est 2,54 fois mieux extrait de l'eau sous leurs formes chlorures respectives.

### Exemple 4 : Caractérisation d'une composition extractante intégrant du MEC2 pour l'extraction du CaCl₂

Cette série d'exemple vise à établir deux isothermes d'extraction du CaCl₂ à 20°C et 80°C pour une composition extractante intégrant 0,1 Mole/L de MEC2, combinée à 1 Mole/L de MSA 9 ; le tout dissout dans du 1,2-dichlorobenzene.

Après réalisation des 7 extractions spécifiques (doublées) en sels, les quantités de cations extraits en pourcentage molaire relatifs avant et après extraction à température ambiante et à iso-volume eau/formulation extractante sont indiquées dans le tableau IV :

**Tableau IV**

| MEC2 | 0,1 M | Taux d'extraction à TA (Org./Eau = 1) | | | | | | |
|---|---|---|---|---|---|---|---|---|
| MSA9 | 1 M | 0,01M | 0,02M | 0,03M | 0,04M | 0,1M | 0,2M | 0,4M |
| Fluidifiant | 12CIPh | 39% | 42% | 41% | 40% | 34% | 27% | 16% |

La même série d'extraction a ensuite été réalisé à 80°C pour donner le tableau V suivant :

**Tableau V**

| MEC2 | 0,1 M | Taux d'extraction à 80°C (Org./Eau = 1) | | | | | | |
|---|---|---|---|---|---|---|---|---|
| MSA9 | 1 M | 0,01M | 0,02M | 0,03M | 0,04M | 0,1M | 0,2M | 0,4M |
| Fluidifiant | 12CIPh | 11% | 16% | 18% | 17% | 18% | 16% | 10% |

Il existe une forte influence de la température d'extraction sur la performance d'extraction. A partir de ces études, et des données collectées, il a été possible de tracer ces isothermes d'absorption en figure 3 pour des concentrations en Mol/Litre. En abscisse est présenté la concentration en NaCl dans l'eau et en ordonnée la concentration en NaCl en phase organique, à l'équilibre d'absorption.
Le procédé d'extraction liquide-liquide de sel selon l'invention est exothermique en absorption et endothermique en régénération ce qui permet une régénération thermique, à l'eau chaude de la composition organique extractante.

### Exemple 5 : Procédé d'extraction incluant la régénération thermique de la composition extractante intégrant du MEC2 et impacts associés sur la désorption du CaCl₂

Deux échantillons de la composition extractante de l'exemple 4 la plus chargée en CaCl₂ à 20°C ont été mis en contact avec une eau saline à 1 Mol/L de CaCl₂ à température ambiante pour accroitre le niveau de chargement en sel des molécules extractantes de cation MEC2 dissoutes, et ainsi se rapprocher de son niveau de saturation en sel (0,1 Mol/L). Ces 2 échantillons ont ensuite été mis en contact avec un iso-volume d'eau distillée à 20°C et mis sous agitation. L'un des deux échantillons diphasiques a ensuite été chauffé jusqu'à 80°C et maintenu sous agitation. Le niveau de chargement initial en sel étant évalué à 80 mMole/L, il apparait que celui-ci chute à 15,27 mMole/L dès la première étape de régénération à 80°C alors qu'en régénération à 20°C, la concentration résiduelle de sel est de 29,3 mMole/L. La figure 4 illustre les résultats obtenus sur plusieurs étapes de mise en contact en série, avec un iso-volume d'eau distillée de la phase liquide organique hydrophobe chargée en sels. La régénération à chaud de la composition extractante est bien plus efficace du fait d'une réduction d'un facteur 2 du nombre d'étapes de régénération nécessaires pour atteindre le même taux de désextraction globale du CaCl₂. A l'usage, il apparait que cet avantage apparait être encore plus important lorsqu'il est mise en œuvre une résine à forts taux de chargement en MEC et donc en sel.

Augmenter la température de régénération permet de réduire le nombre d'étapes successives de mise en contact d'une eau distillée à iso-volume tout en permettant une désextraction plus grande de sels à chaque fois. Elle permet également d'accéder à des eaux de régénération de plus forte concentration en sels desextraits du fait de l'emploi d'un moindre volume d'eau de régénération.

### Exemple 6 : Exemples comparatifs : Extractions sélectives à température ambiante de cations d'un mélange binaire de sel NaCl/CaCl₂

Une saumure contenant un mélange équimolaire de sels, de 0,05 mol/L NaCl et de CaCl₂ chacun, réalisée tel que précédemment décrit a été mis en contact avec deux compositions extractantes, dont une selon l'invention. Ces compositions ne diffèrent entre elles que par le composé MEC utilisé qui reste de la famille des amides primaires di-substitués mais dont la taille du macrocycle est modifié en étant respectivement de 16 carbones (MEC1) et de 24 carbones (MEC2). Ces compositions sont obtenues selon le procédé précédemment décrit.

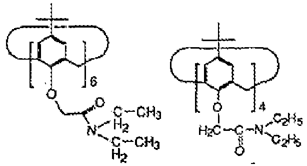

Chaque composition extractante comprend 0,1mol/L de MEC et 2,4mol/L de MSA9 dans du 1,2-dichlorobenzène.

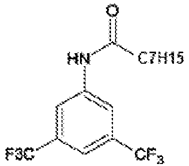

Le 1,2-dichlorobenzène (No. CAS : 95-50-1), de pureté supérieure à 99% provient de la société TCI Chemicals.

Les quantités de cations, en pourcentage molaire, extraits du mélange sont indiquées dans le tableau VI :

**Tableau VI**

| MEC1 / MEC2 | Cations | Na⁺ | Ca⁺⁺ |
|---|---|---|---|
| 4-tert-ButylCalix[4]CH₂C(=O)NEt₂ | %E | 88,0% | 10,0% |
| 4-tert-ButylCalix[6]CH₂C(=O)NEt₂ | %E | 4,0% | 56,0% |

Suivant le MEC sélectionné, en mélange de sels, l'extraction de ces cations voit une sélectivité accrue ou le cation le plus extrait en corps pur devient majoritairement extrait en mélange de sels. La co-absorption est ici favorable à l'extraction initialement la meilleure. En particulier la formulation intégrant le MEC2 à cycle carbone de 24 unités, a un taux d'extraction du calcium par rapport au sodium 14 fois plus élevé en mélange à iso-concentration de cation comparé à un taux de 2,54 pour des solutions ne contenant qu'un de ces sels (cf. exemples 1 & 3). De telles capacités d'extraction ont de nombreuses applications industrielles en détartrage de l'eau.

### Exemple 7 : Extractions sélectives à température ambiante de cations d'un mélange binaire de sels NaCl et CaCl₂ à concentrations initiale différenciée.

Une saumure contenant un mélange de NaCl et de CaCl₂ est réalisée tel que précédemment décrit pour l'obtention des concentrations saline initiales suivantes en mélange : 0,2 Mol/L de NaCl et 0,03 Mol/L de CaCl₂. La résine extractante est quant à elle composée de 0,1 Mol/L de MEC2, de 3,52 Mol/L de MSA2 et d'un complément de MSA1 liquide, également utilisé comme fluidifiant.

Les quantités de cations, en pourcentage molaire, extraits du mélange sont indiquées dans le tableau VII :

**Tableau VII**

| MEC2 | Cations | Na⁺ | Ca⁺⁺ |
|---|---|---|---|
| 4-tert-ButylCalix[6]CH₂C(=O)NEt₂ | %E | 5,0% | 88,0% |

Il apparait ici que le ratio des taux d'extraction pour Ca/Na est de 17,6 ce qui valide l'un des objets de l'invention du fait d'une amélioration des écarts à l'extraction en multi-sels, en présence d'un anion commun.

### Exemple 8 : Extractions sélectives à température ambiante de cations d'un mélange de quatre sels NaCl, CaCl₂, SrCl₂ et BaCl₂

Une saumure contenant un mélange de NaCl, CaCl₂, SrCl₂ et BaCl₂ est réalisée tel que précédemment décrit. Les concentrations de sels dissous sont indiquées dans le tableau VIII en mMol/L. L'extraction a été réalisée une seconde fois avec des concentrations en sels divalents modifiées. Les concentrations en sels dissous sont indiquées au tableau IX en mMol/l.

La composition extractante est composée de 0,1Mol/L de MEC2 et d'un mélange de deux MSA. Ce mélange est constitué de MSA2 généralement appelé [3,5-Bis(Trifluorométhyl)benzyl Alcool] (35TFMBnOH) de n° CAS : 32707-89-4 à hauteur de 60% volume et de MSA1, appelé [3-(Trifluorométhyl)benzyl Alcool] (3TFMBnOH), de formule brute C₈H₇F₃O de MW = 176,14 g/Mole et de n° CAS : 349-75-7, à hauteur de 40% volume faisant à la fois office de fluidifiant et de MSA de par sa forme liquide.

L'extraction est réalisée comme décrit à l'exemple 1 et à température ambiante.

Les quantités de cations extraits en pourcentage molaire sont indiqués dans les tableaux VIII et IX, respectivement pour des concentrations ioniques initiales et finales exprimées en mMoles/L.

**Tableau VIII**

| Cations | CATIONS (mMol/L) | | | ANIONS CI- (mMol/L) | |
|---|---|---|---|---|---|
| | Concentration Initiale | Concentration Finale | %extraction | Concentration Initiale | Concentration Finale |
| Na⁺ | 193,52 | 199,4775 | 0% | 257,74 | 213,38 |
| Ca²⁺ | 29,13 | 0,4916 | 98% | | |
| Sr²⁺ | 4,29 | 0 | 100% | | |
| Ba²⁺ | 4,69 | 0 | 100% | | |

**Tableau IX**

| Cations | CATIONS | | | ANIONS CI- | |
|---|---|---|---|---|---|
| | Concentration Initiale | Concentration Finale | %extraction | Concentration Initiale | Concentration finale |
| Na⁺ | 196,04 | 195,9835 | 0% | 245,4 | 203,16 |
| Ca²⁺ | 9,25 | 0 | 100% | | |
| Sr²⁺ | 9,17 | 0 | 100% | | |
| Ba²⁺ | 9,32 | 0 | 100% | | |

Il apparait ici que pour de fortes concentrations relatives de sodium par rapport à ces cations divalents entartrants, une sélectivité d'extraction de 100% peut être obtenue.

L'extraction sélective des cations divalents démontre la capacité des compositions selon l'invention de lutter efficacement contre le tartre et de purifier l'eau, du fait d'une extraction sélective du Calcium Ca++, du Strontium et du Baryum.

### Exemple 9 : Synthèse des composés MSA9, MSA10, MSAC11 et MSA12

### Schéma de synthèse

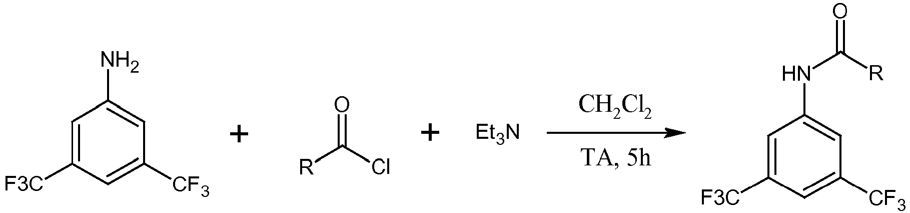

R = n-C₇H₁₅ (MSA9), n-C₉H₁₉ (MSA10), n-C₁₁H₂₃ (MSA11), n-C₁₃H₂₇ (MSA12).

### Protocole

A une solution de 3,5-bis(Trifluorométhyl)aniline (8.79 mL, 56.29 mmol, 1.0 éq.), de dichlorométhane (40 mL) et de triéthylamine (8.63 mL, 61.92 mmol, 1.1 éq.) est additionnée sous agitation et goutte à goutte le chlorure d'acide (56.29 mmol, 1.0 éq.). La température est contrôlée lors de l'ajout et ne doit pas dépasser 38°C (Point ébullition du dichlorométhane). Le mélange réactionnel est agité pendant 5h à température ambiante. Une solution d'HCl 1M (50 mL) est ajoutée puis la phase organique est lavée. Les lavages successifs sont réalisés par une solution d'HCl 1M (50 mL) et une solution de NaCl saturée (50 mL). La phase organique est séchée sur Na₂SO₄, filtrée puis le solvant est évaporé sous pression réduite. Le résidu solide est ensuite repris à l'éther de pétrole (froid ou à température ambiante), lavé, filtré puis séché sous vide pour donner l'amide désiré. L'éther de pétrole utilisé est un mélange d'hydrocarbures composé principalement de n-pentane, 2-méthyl pentane et de numéro CAS 64742-49-0 provenant de la société VWR où il est commercialisé sous la dénomination Ether de Pétrole 40-60°C GPR RECTAPUR. Les caractéristiques des composés obtenus sont présentées en tableau X.

| Tableau XR | Composé | Masse molaire (g/mole) | T° éther pétrole | Rendement | Aspect | Point de fusion |
|---|---|---|---|---|---|---|
| n-C₇H₁₅ | MSA9 | 355,3 | Froid (-20°C) | 91% | Solide blanc | 43-44°C |
| n-C₉H₁₉ | MSA 10 | 383,3 | Ambiante | 92% | Solide blanc | 79-81°C |
| n-C₁₁H₂₃ | MSA11 | 411,4 | Ambiante | 92% | Solide blanc | 60-61°C |
| n-C₁₃H₂₇ | MSA12 | 439,5 | Ambiante | 90% | Solide blanc | 53-54°C |

Les composés MSA9, MSA10, MSAC11 et MSAC12 ont pour dénominations IUPAC respectives : N-[3,5-bis(trifluoromethyl)phenyl]octanamide, N-[3,5-bis(trifluoromethyl)phenyl]decanamide, N-[3,5-bis(trifluoromethyl)phenyl]dodecanamide, N-[3,5-bis(trifluoromethyl)phenyl]tetradecanamide et ont de plus été identifiés par spectrométrie RMN. La figure 6, représente le spectre RMN (CDCl3, 300 MHz) du composé MSA11 dont les pics sont les suivants : 1H RMN (CDCl3, 300 MHz) : δ (ppm) = 0.87 (t, 3J = 7.0 Hz, 3H), 1.20-1.35 (m, 20H), 1.73 (quint., 3J = 7.0 Hz, 2H), 2.40 (t, , 3J = 7.0 Hz, 2H), 7.58 (s, 1H), 7.77 (bs, 1H), 8.04 (s, 2H).

### Exemple 10 : Extractions à température ambiante de solutions salines en mono-sels avec le MEC10.

Cet exemple 10 est effectué dans les mêmes conditions que les exemples 1 et 3 excepté que le MEC considéré est le MEC10.

Le MEC utilisé est le 4-tert-butyl-Calix[4]arène acid tetraethyl ester (MEC10 de n° CAS : 97600-39-0).

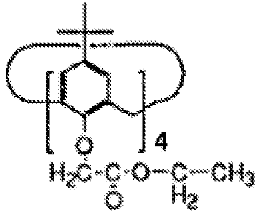

Il a été synthétisé en interne à partir du 4-tert-Butylcalix[4]arène de formule brute C₄₄H₅₆O₄ et de n° CAS 60705-62-6, et du bromoacétate d'éthyle de CAS n°105-36-2, produits achetés chez Sigma-Aldrich pour la mise en oeuvre d'une procédure classique d'addition sur un alcool, dans un mélange THF/DMF à 5/1 en volume. Le MSA utilisé est le MSA2 de n° CAS 32707-89-4, C₉H₆F₆O, MW= 244,13 g/mole, Solide blanc qui est disponible chez plusieurs distributeurs.

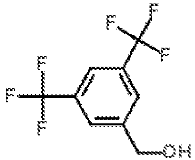

Après réalisation des 7 extractions spécifiques (doublées) en sels, les quantités de cations extraits en pourcentage molaire relatifs avant et après extraction à température ambiante et à iso-volume eau/formulation extractante sont indiquées dans le tableau XI :

**Tableau XI**

| MEC10 | 0,1 M | Taux d'extraction à TA (Org./Eau = 1) | | | | | | |
|---|---|---|---|---|---|---|---|---|
| MSA2 | 3,52 M | LiCl | NaCl | KCl | MgCl₂ | CaCl₂ | SrCl₂ | BaCl₂ |
| Fluidifiant | CH₂Cl₂ | 5,5% | 66,2% | 14,4% | 5,1% | 4,7% | 5,9% | 3,7% |

L'extraction de cations d'une saumure constituée d'un seul chlorure alcalin ou alcalino terreux varie donc de 3,7% à 66,2 % suivant le cation. Dans ces solutions d'un seul sel, il apparait que le MEC10 est sélectif pour le chlorure de sodium parmi les cations alcalins et que les cations divalents sont très faiblement extraits avec une sélectivité Na/Ca de 14.
La composition selon l'invention démontre donc une spécificité particulièrement intéressante de cette formulation pour des applications industrielles en lien avec par exemple la chlorochimie où le NaCl peut être extrait d'une eau de mer ou d'une saumure de façon sélectif afin d'alimenter les électrolyseurs de production de NaOH, de HCl, voire de Cl₂.

### Exemple 11 : Extractions à température ambiante de solutions salines en mono-sels avec le MEC12.

Cet exemple 11 est effectué dans les mêmes conditions que les exemples 1, 3 et 10 excepté que le MEC considéré est le MEC12.

Le MEC utilisé est le 4-tert-butyl-Calix[6]arène acid hexaethyl ester (MEC12 de n° CAS : 92003-62-8).

Il a été synthétisé en interne à partir du 4-tert-Butylcalix[6]arène de formule brute C₆₆H₈₄O₆ et de n° CAS 78092-53-2 .et du bromoacétate d'éthyle de CAS n°105-36-2, produits achetés chez Sigma-Aldrich pour la mise en oeuvre d'une procédure classique d'addition sur un alcool, dans un mélange THF/DMF à 5/1 en volume. 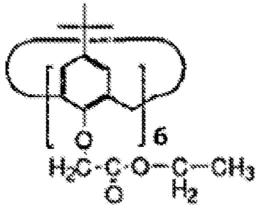 Le MSA utilisé est le MSA2 de n° CAS 32707-89-4, C₉H₆F₆O, MW= 244,13 g/mole, Solide blanc qui est disponible chez plusieurs distributeurs.

Après réalisation des 7 extractions spécifiques (doublées) en sels, les quantités de cations extraits en pourcentage molaire relatifs avant et après extraction à température ambiante et à iso-volume eau/formulation extractante sont indiquées dans le tableau XII :

**Tableau XII**

| MEC12 | 0,1 M | Taux d'extraction à TA (Org./Eau = 1) | | | | | | |
|---|---|---|---|---|---|---|---|---|
| MSA2 | 3,52 M | LiCl | NaCl | KCl | MgCl₂ | CaCl₂ | SrCl₂ | BaCl₂ |
| Fluidifiant | CH₂Cl₂ | 9,0% | 29,6% | 55,7% | 5,4% | 5,5% | 4,6% | 11,8% |

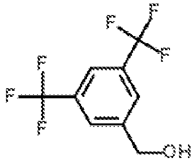

L'extraction de cations d'une saumure constituée d'un seul chlorure alcalin ou alcalino terreux varie donc de 4,6% à 55,7 % suivant le cation. Dans ces solutions d'un seul sel, il apparait que le MEC12 est sélectif pour les sels de chlorure alcalins de plus grand diamètre et que les cations divalents sont très faiblement extraits avec une sélectivité K/Ca de 10,2, et qui doit être encore meilleure pour le Rb+ et le Cs+ car ce MEC12 est connu pour être un bon ionophore du cesium. L'invention n'est pas limitée aux modes de réalisations présentées et d'autres modes de réalisation apparaîtront clairement à l'homme du métier. Il est notamment possible de combiner plusieurs MEC au sein d'une formulation d'extraction pour permettre d'associer les performances spécifiques de chaque MEC pour l'obtention d'une performance globale optimale.

## Revendications

1. - Procédé de déionisation de l'eau par extraction en milieu liquide à régénération thermique, appliqué à l'extraction d'une espèce cationique non-alcaline divalente et d'une espèce anionique complémentaire d'une solution aqueuse liquide saline, ladite solution aqueuse liquide saline comprenant :
- un sel de ladite espèce cationique non-alcaline, et
- un sel d'une espèce cationique d'un métal alcalin,
ledit procédé comprenant les étapes suivantes :
a) le mélange dans un premier réacteur, à une première température, d'une phase organique hydrophobe liquide et de ladite solution aqueuse liquide saline, pour l'obtention subséquente d'une solution aqueuse liquide traitée et d'une phase organique liquide hydrophobe chargée en lesdites espèces cationique non-alcaline et anionique complémentaire,
ladite phase organique hydrophobe liquide comprenant une molécule extractante de ladite espèce cationique non-alcaline, une molécule solvatante de ladite espèce anionique complémentaire ("MSA"), ladite molécule solvatante de ladite espèce anionique complémentaire étant un composé hydrophobe, et protique, dont le pKa dans l'eau à 25 °C est d'au moins 9 et est inférieur à 15 à 25°C et, éventuellement, un fluidifiant ;
b) la séparation, d'une part, de la solution aqueuse liquide traitée et, d'autre part, de ladite phase organique liquide hydrophobe chargée en lesdites espèces cationique non-alcaline et anionique complémentaire; et
c) le mélange, à une deuxième température, en phase liquide, dans un deuxième réacteur, de ladite phase organique liquide hydrophobe chargée en lesdites espèces cationique non-alcaline et anionique complémentaire et d'une solution aqueuse liquide de régénération, pour l'obtention subséquente d'une phase organique liquide hydrophobe régénérée et d'une solution aqueuse liquide de régénération chargée en lesdites espèces cationique non-alcaline et anionique complémentaire, la différence entre lesdites première et deuxième températures variant de 30 °C à 150 °C ;
où ladite molécule extractante d'une espèce cationique non-alcaline est un macrocycle dont le cycle est formé de 24 à 32 atomes de carbone, fonctionnalisé par des groupements amides, et de formule (I) ou (II) suivantes : 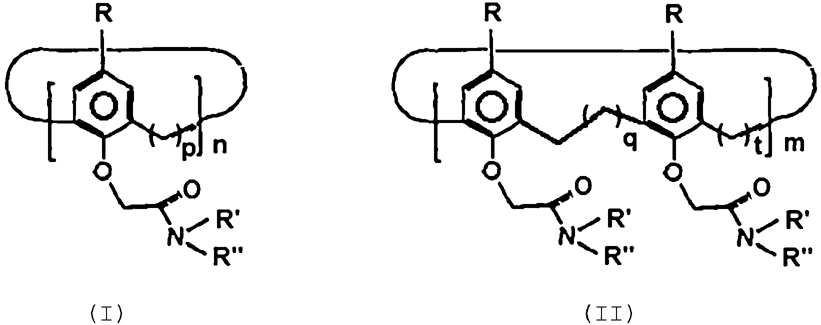
où
- n est un entier allant de 5 à 8,
- p est 1 ou 2,
- m est 3 ou 4,
- q et t, identiques ou différents, sont 0, 1 ou 2,
- R est un groupement tert-butyle, tert-pentyle, tert-octyle, O-méthyle, O-éthyle, O-propyle, O-isopropyle, O-butyle, O-isobutyle, O-pentyle, O-hexyle, O-heptyle, O-octyle, OCH₂-Phényle ou un atome d'hydrogène,
- R' et R'', identiques ou différents, sont choisis dans le groupe constitué par les groupements méthyle, éthyle, propyle, isopropyle, butyle et isobutyle, pentyle, hexyle, heptyle et octyle ou R' et R'' forment ensemble un cycle pyrrolidine, pipéridine ou morpholine.

2. - Procédé selon la revendication 1, **caractérisé par le fait que** la molécule extractante d'au moins une espèce cationique non-alcaline est choisie parmi les composés de formule (I) à macrocycle calixarène, avec p=1 et R, R', R'' et n tels que définis ci-après : 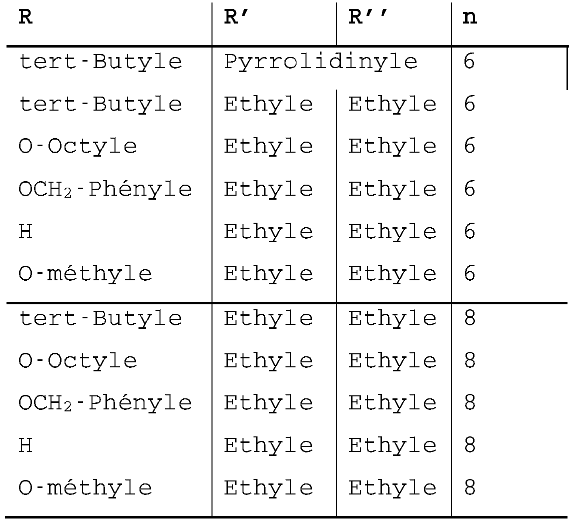 avantageusement dans leur configuration cône ou cône partiel.

3. - Procédé selon l'une des revendications 1 et 2, **caractérisé par le fait que** ladite espèce cationique non-alcaline est au moins un des cations suivants : calcium, strontium et baryum.

4. - Procédé selon l'une quelconque des revendications 1 à 3, **caractérisé par le fait que** l'espèce cationique non-alcaline est extraite sélectivement par rapport à l'espèce cationique d'un métal alcalin.

5. - Procédé selon l'une quelconque des revendications 1 à 4, **caractérisé par le fait que** l'espèce cationique d'un métal alcalin est l'ion sodium Na⁺.

6. - Procédé de déionisation de l'eau par extraction en milieu liquide à régénération thermique appliqué à l'extraction sélective d'au moins une espèce cationique alcaline et d'une espèce anionique complémentaire d'une solution aqueuse liquide saline, ladite solution aqueuse liquide saline comprenant :
- un sel de ladite au moins une espèce cationique alcaline ; et
- un sel d'une espèce cationique de métal alcalino-terreux, ledit procédé comprenant les étapes suivantes :
a) le mélange, dans un premier réacteur, à une première température, d'une phase organique hydrophobe liquide et de ladite solution aqueuse liquide saline, pour l'obtention subséquente d'une solution aqueuse liquide traitée et d'une phase organique liquide hydrophobe chargée en lesdites espèces cationique alcaline et anionique complémentaire,
ladite phase organique hydrophobe liquide comprenant une molécule extractante de ladite espèce cationique alcaline, une molécule solvatante de ladite espèce anionique complémentaire ("MSA"), ladite molécule solvatante de ladite espèce anionique complémentaire étant un composé hydrophobe, et protique, dont le pKa dans l'eau à 25 °C est d'au moins 9 et est inférieur à 15 à 25°C et éventuellement un fluidifiant ;
b) la séparation, d'une part, de la solution aqueuse liquide traitée, et, d'autre part, de ladite phase organique liquide hydrophobe chargée en lesdites espèces cationique alcaline et anionique complémentaire ; et
c) le mélange, à une deuxième température, en phase liquide, dans un deuxième réacteur, de ladite phase organique liquide hydrophobe chargée en lesdites espèces cationique alcaline et anionique complémentaire et d'une solution aqueuse liquide de régénération, pour l'obtention subséquente d'une phase organique liquide hydrophobe régénérée et d'une solution aqueuse liquide de régénération, chargée en lesdites espèces cationique alcaline et anionique complémentaire, la différence entre lesdites première et deuxième températures variant de 30°C à 150°C,
où ladite molécule extractante d'au moins une espèce cationique alcaline est un macrocycle dont le cycle est formé de 16 à 24 atomes, en particulier de carbone, et fonctionnalisé par des groupements ester ou cétone,
où ladite molécule extractante d'au moins une espèce cationique alcaline est choisie parmi les composés de formule générique (V) ou (VI) : 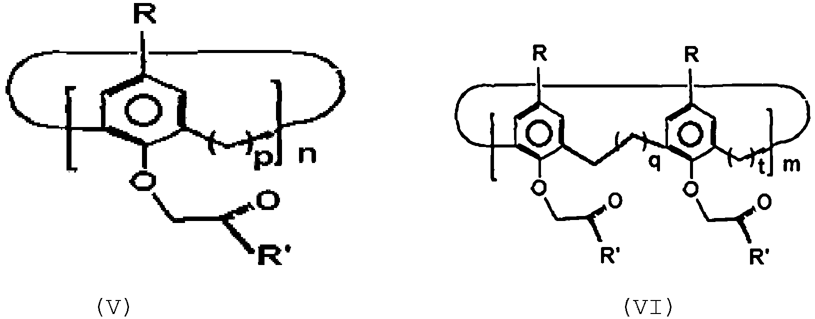
dans laquelle :
- n est 4, 5 ou 6 ;
- p est 1 ou 2 ;
- m est 2 ou 3 ;
- q et t, identiques ou différentes, sont 0,1 ou 2
- R est un groupement tert-butyle, tert-pentyle, tert-octyle ou un atome d'hydrogène ;
- R' est choisi dans le groupe constitué par les groupements méthyle, éthyle, propyle, isopropyle, butyle, isobutyle, pentyle, hexyle, heptyle et octyle pour la réalisation d'un groupement liant de type cétone, ou dans le groupe constitué par les groupements O-méthyle, O-éthyle, O-propyle, O-isopropyle, O-butyle, O-isobutyle, O-pentyle, O-hexyle, O-heptyle, O-octyle, OCH₂-Phényle pour la réalisation d'un groupement liant de type ester.

7. - Procédé selon la revendication 6, **caractérisé par le fait que** la molécule extractante d'au moins une espèce cationique alcaline est choisie parmi les composés de formule (V) à macrocycle calixarène, avec p=1 et R, R' et n tels que définis ci-après :
| R | R' | n |
|---|---|---|
| H | O- éthyle | 4 |
| H | O-isopropyle | 4 |
| H | O-tert-butyle | 4 |
| tert-butyle | O-éthyle | 4 |
| tert-butyle | O-isopropyle | 4 |
| tert-butyle | O-tert-butyle | 4 |
| tert-octyle | O-éthyle | 4 |
| tert-butyle | O-éthyle | 5 |
| tert-butyle | tert-butyle | 4 |
| tert-butyle | O-éthyle | 6 |
avantageusement dans leur configuration cône ou cône partiel.

8. - Procédé selon l'une des revendications 6 et 7, **caractérisé par le fait que** la molécule extractante présente une constante de complexation Log K, dans le méthanol à 25°C, de l'espèce cationique alcaline à extraire, de valeur supérieure à 3 et inférieure à 11, de préférence supérieure à 5 et inférieure à 9.

9. - Procédé selon l'une des revendications 6 à 8, **caractérisé par le fait que** ladite au moins une espèce cationique alcaline est choisie parmi lithium, sodium, potassium, rubidium et césium.

10. - Procédé selon l'une des revendications 6 à 9, **caractérisé par le fait qu'**il consiste en une extraction sélective de sels alcalins à anions hydrophiles, tels que chlorures.

11. - Procédé selon l'une des revendications 1 à 10, **caractérisé par le fait que** le fluidifiant est choisi parmi les solvants aromatiques polaires, issus par exemple des dichlorobenzènes, des dichlorotoluènes, de leurs dérivés et de leurs mélanges.

12. - Procédé selon l'une des revendications 1 à 11, **caractérisé par le fait que** le pKa de la molécule solvatante de ladite espèce anionique complémentaire est d'au moins 10,5 et est inférieur au pKa de l'eau à 25°C.

13. - Composition organique liquide hydrophobe constituée par la phase organique liquide hydrophobe telle que définie au point a) de la revendication 1, et comportant une molécule extractante d'une espèce cationique non-alcaline telle que définie à la revendication 1 ou 2, une molécule solvatante d'une espèce anionique complémentaire telle que définie au point a) de la revendication 1 ou à la revendication 12, et le cas échéant un fluidifiant tel que défini au point a) de la revendication 1 ou à la revendication 11.

14. - Composition organique liquide hydrophobe constituée par la phase organique liquide hydrophobe telle que définie au point a) de la revendication 6, et comportant une molécule extractante d'une espèce cationique alcaline telle que définie à la revendication 6 ou 7, une molécule solvatante d'une espèce anionique complémentaire telle que définie au point a) de la revendication 6 ou à la revendication 12, et le cas échéant un fluidifiant tel que défini au point a) de la revendication 6 ou à la revendication 11.

## Patentansprüche

1. - Verfahren zur Entionisierung von Wasser durch Extraktion in einem flüssigen Medium mit thermischer Regeneration, angewendet auf die Extraktion einer zweiwertigen nicht-alkalischen kationischen Spezies und einer komplementären anionischen Spezies aus einer salzhaltigen wässrigen Flüssigkeitslösung, wobei die salzhaltige wässrige Flüssigkeitslösung umfasst:
- ein Salz der genannten nicht-alkalischen kationischen Spezies und
- ein Salz einer kationischen Spezies eines Alkalimetalls, wobei das Verfahren die folgenden Schritte umfasst:
a) das Mischen einer flüssigen hydrophoben organischen Phase und der salzhaltigen wässrigen Flüssigkeitslösung in einem ersten Reaktor bei einer ersten Temperatur, um anschließend eine behandelte wässrige Lösung und eine flüssige hydrophobe organische Phase zu erhalten, die mit der nicht-alkalischen kationischen Spezies und der komplementären anionischen Spezies beladen ist,
wobei die flüssige hydrophobe organische Phase ein Extraktionsmolekül der nicht-alkalischen kationischen Spezies und ein Solvatationsmolekül der komplementären anionischen Spezies ("MSA") umfasst, wobei das Solvationsmolekül der komplementären anionischen Spezies eine hydrophobe, protische Verbindung ist, deren pKa-Wert in Wasser bei 25 °C mindestens 9 und bei 25 °C weniger als 15 beträgt, und gegebenenfalls ein Verflüssigungsmittel;
b) das Trennen der behandelten wässrigen Flüssigkeitslösung einerseits und der hydrophoben organischen Flüssigkeitsphase, die mit der nicht-alkalischen kationischen Spezies und der komplementären anionischen Spezies beladen ist, andererseits; und
c) das Mischen der hydrophoben organischen Flüssigkeitsphase, die mit der nicht-alkalischen kationischen Spezies und der komplementären anionischen Spezies beladen ist, und einer wässrigen Flüssigkeitsregenerierungslösung bei einer zweiten Temperatur in der Flüssigphase in einem zweiten Reaktor, um anschließend eine regenerierte hydrophobe organische Flüssigkeitsphase und eine wässrige Flüssigkeitsregenerierungslösung zu erhalten, die mit der genannten nicht-alkalischen kationischen Spezies und der komplementären anionischen Spezies beladen ist, wobei die Differenz zwischen der ersten und der zweiten Temperatur zwischen 30 °C und 150 °C variiert;
wobei das Extraktionsmolekül einer nicht-alkalischen kationischen Spezies ein Makrozyklus ist, dessen Ring aus 24 bis 32 Kohlenstoffatomen besteht, der durch Amidgruppen funktionalisiert ist und die folgende Formel (I) oder (II) aufweist: 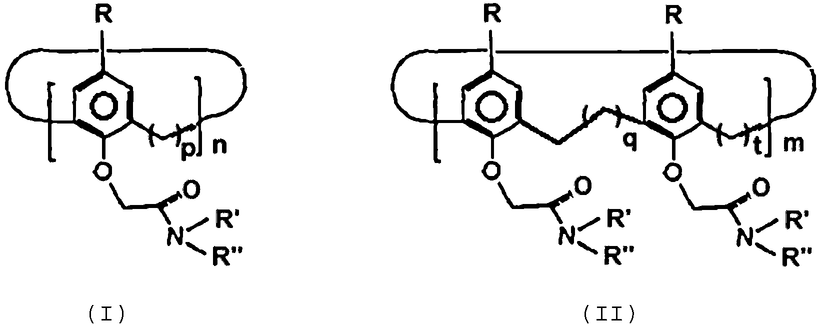
wobei
- n eine ganze Zahl von 5 bis 8 ist,
- p 1 oder 2 ist,
- m 3 oder 4 ist,
- q und t, die gleich oder unterschiedlich sind, 0, 1 oder 2 sind,
- R eine tert-Butyl-, tert-Pentyl-, tert-Octyl-, O-Methyl-, O-Ethyl-, O-Propyl-, O-Isopropyl-, O-Butyl-, O-Isobutyl-, O-Pentyl-, O-Hexyl-, O-Heptyl-, O-Octyl-, OCH₂-PhenylGruppe oder ein Wasserstoffatom ist,
- R' und R", die gleich oder verschieden sind, aus der Gruppe ausgewählt sind, die aus Methyl-, Ethyl-, Propyl-, Isopropyl-, Butyl- und Isobutyl-, Pentyl-, Hexyl-, Heptyl- und Octyl-gruppen besteht, oder R' und R" zusammen einen Pyrrolidin-, Piperidin- oder Morpholinring bilden.

2. - Verfahren nach Anspruch 1, **dadurch gekennzeichnet, dass** das Extraktionsmolekül mindestens einer nicht-alkalischen kationischen Spezies aus den Verbindungen der Formel (I) mit einem Calixaren-Makrozyklus ausgewählt ist, wobei p = 1 und R, R', R'' und n wie nachstehend definiert sind:
| **R** | **R'** | **R"** | **n** |
|---|---|---|---|
| tert-Butyl | Pyrrolidinyl | | 6 |
| tert-Butyl | Ethyl | Ethyl | 6 |
| O-Octyl | Ethyl | Ethyl | 6 |
| OCH₂ -Phenyl | Ethyl | Ethyl | 6 |
| H | Ethyl | Ethyl | 6 |
| O-Methyl | Ethyl | Ethyl | 6 |
| tert-Butyl | Ethyl | Ethyl | 8 |
| O-Octyl | Ethyl | Ethyl | 8 |
| OCH₂ -Phenyl | Ethyl | Ethyl | 8 |
| H | Ethyl | Ethyl | 8 |
| O-Methyl | Ethyl | Ethyl | 8 |
vorteilhafterweise in ihrer Kegel- oder Teilkegelkonfiguration.

3. - Verfahren nach einem der Ansprüche 1 und 2, **dadurch gekennzeichnet, dass** die nicht-alkalische kationische Spezies mindestens eines der folgenden Kationen ist: Calcium, Strontium und Barium.

4. - Verfahren nach einem der Ansprüche 1 bis 3, **dadurch gekennzeichnet, dass** die nicht-alkalische kationische Spezies selektiv gegenüber der kationischen Spezies eines Alkalimetalls extrahiert wird.

5. - Verfahren nach einem der Ansprüche 1 bis 4, **dadurch gekennzeichnet, dass** die kationische Spezies eines Alkalimetalls das Natriumion Na⁺ ist.

6. - Verfahren zur Entionisierung von Wasser durch Extraktion in einem flüssigen Medium mit thermischen Regeneration, das zur selektiven Extraktion mindestens einer alkalischen kationischen Spezies und einer komplementären anionischen Spezies aus einer salzhaltigen wässrigen Flüssigkeitslösung angewendet wird, wobei die salzhaltige wässrige Flüssigkeitslösung umfasst:
- ein Salz der mindestens einen alkalischen kationischen Spezies; und
- ein Salz einer kationischen Spezies eines Erdalkalimetalls, wobei das Verfahren die folgenden Schritte umfasst:
a) Mischen einer flüssigen hydrophoben organischen Phase und der salzhaltigen wässrigen Flüssigkeitslösung in einem ersten Reaktor bei einer ersten Temperatur, um anschließend eine behandelte wässrige Flüssigkeitslösung und eine flüssige hydrophobe organische Phase zu erhalten, die mit der alkalischen kationischen Spezies und der komplementären anionischen Spezies beladen ist, wobei die flüssige hydrophobe organische Phase ein Extraktionsmolekül der alkalischen kationischen Spezies ("MSA"), ein Solvatationsmolekül der komplementären anionischen Spezies, wobei die komplementäre anionische Spezies eine hydrophobe, protische Verbindung ist, deren pKa-Wert in Wasser bei 25 °C mindestens 9 und bei 25 °C weniger als 15 beträgt, und gegebenenfalls ein Verflüssigungsmittel umfasst;
b) das Trennen der behandelten wässrigen Flüssigkeitslösung einerseits und der hydrophoben organischen Flüssigkeitsphase, die mit der kationischen alkalischen Spezies und der komplementären anionischen Spezies beladen ist, andererseits; und
c) das Mischen der hydrophoben organischen Flüssigkeitsphase, die mit der alkalischen kationischen Spezies und der komplementären anionischen Spezies beladen ist, und einer wässrigen Flüssigkeitsregenerationslösung bei einer zweiten Temperatur in der Flüssigphase in einem zweiten Reaktor um anschließend eine regenerierte hydrophobe organische Flüssigkeitsphase und eine wässrige Flüssigkeitsregenerierungslösung zu erhalten, die mit der genannten alkalischen kationischen Spezies und der komplementären anionischen Spezies beladen ist, wobei die Differenz zwischen der ersten und der zweiten Temperatur zwischen 30 °C und 150 °C variiert,
wobei das Extraktionsmolekül mindestens einer alkalischen kationischen Spezies ein Makrozyklus ist, dessen Ring aus 16 bis 24 Atomen, insbesondere Kohlenstoffatomen, besteht und durch Ester- oder Ketongruppen funktionalisiert ist,
wobei das Extraktionsmolekül mindestens einer alkalischen kationischen Spezies aus den Verbindungen der allgemeinen Formel (V) oder (VI) ausgewählt ist: 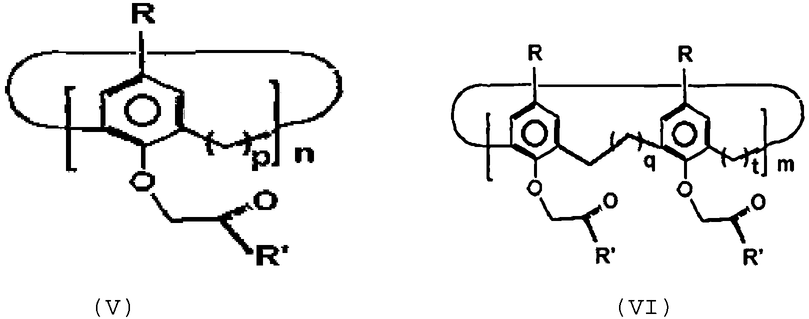
wobei:
- n 4, 5 oder 6 ist;
- p 1 oder 2 ist;
- m 2 oder 3 ist;
- q und t, die gleich oder verschieden sind, 0, 1 oder 2 sind
- R eine tert-Butyl-, tert-Pentyl-, tert-Octylgruppe oder ein Wasserstoffatom ist;
- R' aus der Gruppe ausgewählt ist, die aus Methyl-, Ethyl-, Propyl-, Isopropyl-, Butyl-, Isobutyl-, Pentyl-, Hexyl-, Heptyl- und Octylgruppen zur Bildung einer Keton-Bindungsgruppe besteht, oder aus der Gruppe, die aus O-Methyl-, O-Ethyl-, O-Propyl-, O-Isopropyl-, O-Butyl-, O-Isobutyl-, O-Pentyl-, O-Hexyl-, O-Heptyl-, O-Octyl-, OCH(₂₎-Phenylgruppen zur Bildung einer esterartigen Bindungsgruppe besteht.

7. - Verfahren nach Anspruch 6, **dadurch gekennzeichnet, dass** das Extraktionsmolekül mindestens einer alkalischen kationischen Spezies aus den Verbindungen der Formel (V) mit einem Calixaren-Makrozyklus ausgewählt ist, wobei p=1 und R, R' und n wie nachstehend definiert sind:
| R | R' | n |
|---|---|---|
| H | O-Ethyl | 4 |
| H | O-Isopropyl | 4 |
| H | O-tert-Butyl | 4 |
| tert-Butyl | O-Ethyl | 4 |
| tert-Butyl | O-Isopropyl | 4 |
| tert-Butyl | O-tert-Butyl | 4 |
| tert-octyl | O-Ethyl | 4 |
| tert-Butyl | O-Ethyl | 5 |
| tert-Butyl | tert-Butyl | 4 |
| tert-Butyl | O-Ethyl | 6 |
vorteilhafterweise in ihrer Kegel- oder Teilkegelkonfiguration.

8. - Verfahren nach einem der Ansprüche 6 und 7, **dadurch gekennzeichnet, dass** das Extraktionsmolekül eine Komplexierungskonstante Log K in Methanol bei 25 °C der zu extrahierenden alkalischen Kationenspezies von mehr als 3 und weniger als 11, vorzugsweise von mehr als 5 und weniger als 9, aufweist.

9. - Verfahren nach einem der Ansprüche 6 bis 8, **dadurch gekennzeichnet, dass** die mindestens eine alkalische kationische Spezies aus Lithium, Natrium, Kalium, Rubidium und Cäsium ausgewählt ist.

10. - Verfahren nach einem der Ansprüche 6 bis 9, **dadurch gekennzeichnet, dass** es in einer selektiven Extraktion von Alkalisalzen mit hydrophilen Anionen, wie Chloriden, besteht.

11. - Verfahren nach einem der Ansprüche 1 bis 10, **dadurch gekennzeichnet, dass** das Verflüssigungsmittel aus polaren aromatischen Lösungsmitteln ausgewählt ist, die beispielsweise aus Dichlorbenzolen, Dichlortoluolen, deren Derivaten und deren Gemischen stammen.

12. - Verfahren nach einem der Ansprüche 1 bis 11, **dadurch gekennzeichnet, dass** der pKa-Wert des Solvatationsmoleküls der genannten komplementären Anionenspezies mindestens 10,5 beträgt und unter dem pKa-Wert von Wasser bei 25 °C liegt.

13. - Hydrophobe flüssige organische Zusammensetzung, bestehend aus der hydrophoben flüssigen organischen Phase, wie in Punkt a) des Anspruchs 1 definiert, und umfassend ein Extraktionsmolekül einer nicht-alkalischen kationischen Spezies, wie in Anspruch 1 oder 2 definiert, einem Solvatationsmolekül einer komplementären anionischen Spezies, wie in Punkt a) des Anspruchs 1 oder in Anspruch 12 definiert, und gegebenenfalls einem Verflüssigungsmittel, wie in Punkt a) des Anspruchs 1 oder in Anspruch 11 definiert.

14. - Hydrophobe flüssige organische Zusammensetzung, bestehend aus der hydrophoben flüssigen organischen Phase, wie in Punkt a) von Anspruch 6 definiert, und umfassend ein Extraktionsmolekül einer alkalischen kationischen Spezies, wie in Anspruch 6 oder 7 definiert, ein Solvatationsmolekül einer komplementären anionischen Spezies, wie in Punkt a) von Anspruch 6 oder in Anspruch 12 definiert, und gegebenenfalls ein Verflüssigungsmittel, wie in Punkt a) von Anspruch 6 oder in Anspruch 11 definiert.

## Claims

1. - A process for deionizing water by extraction in a liquid medium with thermal regeneration, applied to the extraction of a divalent, non-alkaline cationic species and of a complementary anionic species from a saline liquid aqueous solution, the saline liquid aqueous solution comprising:
- a salt of the non-alkaline cationic species, and
- a salt of a cationic species of an alkaline metal,
the process comprising the following steps:
a) mixing in a first reactor, at a first temperature, of a liquid hydrophobic organic phase and of the saline liquid aqueous solution, in order to subsequently obtain a treated liquid aqueous solution and a hydrophobic liquid organic phase charged with the non-alkaline cationic species and the complementary anionic species,
the liquid hydrophobic organic phase comprising an extracting molecule of the non-alkaline cationic species, a solvating molecule of the complementary anionic species ("MSA"), the solvating molecule of the complementary anionic species being a hydrophobic and protic compound, the pKa of which in water at 25°C being at least 9 and being lower than 15 at 25°C, and optionally a fluidizing agent;
b) separating, on one hand, the treated liquid aqueous solution and, on the other hand, the liquid hydrophobic organic phase charged with the non-alkaline cationic species and the complementary anionic species; and
c) mixing, at a second temperature, in the liquid phase, in a second reactor, of the liquid hydrophobic organic phase, charged with the non-alkaline cationic species and the complementary anionic species, with a regeneration liquid aqueous solution, in order to subsequently obtain a regenerated liquid hydrophobic organic phase and a regeneration liquid aqueous solution charged with the non-alkaline cationic species and the complementary anionic species, the difference between the first and second temperatures varying from 30°C to 150°C;
wherein the extracting molecule of a non-alkaline cationic species is a macrocycle, the cycle of which is formed from 24 to 32 carbon atoms, functionalized with amide groups, having the following formulae (I) or (II): 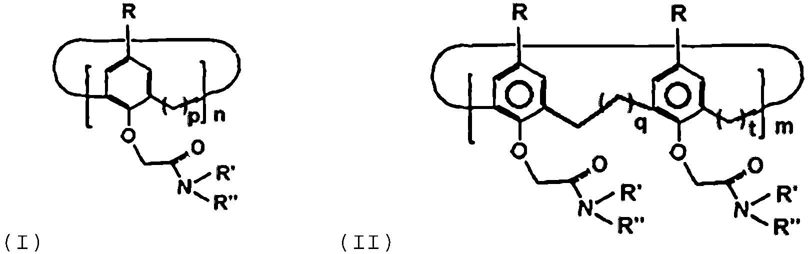 where
- n is an integer from 5 to 8,
- p is 1 or 2,
- m is 3 or 4,
- q and t, identical or different, are 0, 1 or 2,
- R is a tert-butyl, tert-pentyl, tert-octyl, O-methyl, O-ethyl, O-propyl, O-isopropyl, O-butyl, O-isobutyl, O-pentyl, O-hexyl, O-heptyl, O-octyl, OCH₂-Phenyl group, or a hydrogen atom,
- R' and R", identical or different, are selected from the group constituted by methyl, ethyl, propyl, isopropyl, butyl and isobutyl, pentyl, hexyl, heptyl and octyl groups, or R' and R" together form a pyrrolidine, piperidine or morpholine ring.

2. - The process according to claim 1, **characterized by** the fact that the extracting molecule of the at least one non-alkaline cationic species is selected from the compounds of formula (I) with calixarene macrocycle, with p=1, and R, R', R'' and n as defined below:
| **R** | **R'** | **R"** | **n** |
|---|---|---|---|
| tert-Butyl | Pyrrolidinyl | | 6 |
| tert-Butyl | Ethyl | Ethyl | 6 |
| O-Octyl | Ethyl | Ethyl | 6 |
| OCH₂-Phenyl | Ethyl | Ethyl | 6 |
| H | Ethyl | Ethyl | 6 |
| O-methyl | Ethyl | Ethyl | 6 |
| tert-Butyl | Ethyl | Ethyl | 8 |
| O-Octyl | Ethyl | Ethyl | 8 |
| OCH₂-Phenyl | Ethyl | Ethyl | 8 |
| H | Ethyl | Ethyl | 8 |
| O-methyl | Ethyl | Ethyl | 8 |
advantageously in their cone or partial cone configuration.

3. - The process according to one of claims 1 or 2, **characterized by** the fact that the non-alkaline cationic species is at least one of the following cations: calcium, strontium and barium.

4. - The process according to anyone of claims 1 to 3, **characterized by** the fact that the non-alkaline cationic species is selectively extracted with respect to the cationic species of an alkaline metal.

5. - The process according to anyone of claims 1 to 4, **characterized by** the fact that the cationic species of an alkaline metal is sodium ion Na⁺.

6. - A process for deionizing water by extraction in a liquid medium with thermal regeneration, applied to the selective extraction of at least one alkaline cationic species and of a complementary anionic species from a saline liquid aqueous solution, the saline liquid aqueous solution comprising:
- a salt of the at least one alkaline cationic species, and
- a salt of a cationic species of an alkaline earth metal,
the process comprising the following steps:
a) mixing in a first reactor, at a first temperature, of a liquid hydrophobic organic phase and of the saline liquid aqueous solution, in order to subsequently obtain a treated liquid aqueous solution and a hydrophobic liquid organic phase charged with the alkaline cationic species and the complementary anionic species,
the liquid hydrophobic organic phase comprising an extracting molecule of the alkaline cationic species, a solvating molecule of the complementary anionic species ("MSA"), the solvating molecule of the complementary anionic species being a hydrophobic and protic compound, the pKa of which in water at 25°C being at least 9 and being lower than 15 at 25°C, and optionally a fluidizing agent;;
b) separating, on one hand, the treated liquid aqueous solution and, on the other hand, the liquid hydrophobic organic phase charged with the alkaline cationic species and the complementary anionic species; and
c) mixing, at a second temperature, in the liquid phase, in a second reactor, of the liquid hydrophobic organic phase, charged with the alkaline cationic species and the complementary anionic species, with a regeneration liquid aqueous solution, in order to subsequently obtain a regenerated liquid hydrophobic organic phase and a regeneration liquid aqueous solution charged with the alkaline cationic species and the complementary anionic species, the difference between the first and second temperatures varying from 30°C to 150°C;
wherein the extracting molecule of at least one alkaline cationic species is a macrocycle, the cycle of which is formed from 16 to 24 atoms, in particular of carbon, and functionalized with ester or ketone groups,
where the extracting molecule of at least one alkaline cationic species is selected from the compounds of generic formulae (V) or (VI): 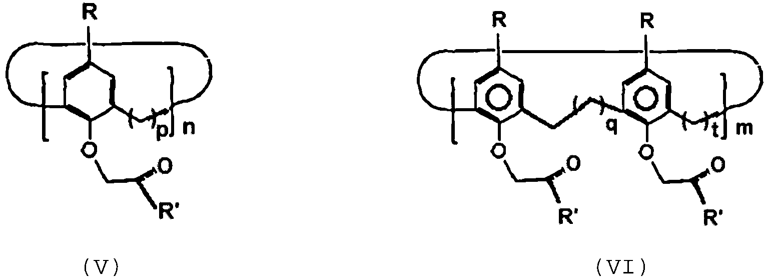
where
- n is 4, 5 or 6
- p is 1 or 2,
- m is 2 or 3,
- q and t, identical or different, are 0, 1 or 2,
- R is a tert-butyl, tert-pentyl, tert-octyl group, or a hydrogen atom,
- R' is selected from the group constituted by methyl, ethyl, propyl, isopropyl, butyl, isobutyl, pentyl, hexyl, heptyl and octyl groups, in order to make a ketone-type binding group, or R' is selected from the group consisting of O-methyl, O-ethyl, O-propyl, O-isopropyl, O-butyl, O-isobutyl, O-pentyl, O-hexyl, O-heptyl, O-octyl, OCH₂-Phenyl groups in order to make an ester-type binding group.

7. - The process according to claim 6, **characterized by** the fact that the extracting molecule of at least one alkaline cationic species is selected from the compounds of formula (V) with calixarene macrocycle, with p=1, and R, R' and n as defined below:
| R | R' | n |
|---|---|---|
| H | O-ethyl | 4 |
| H | O-isopropyl | 4 |
| H | O-tert-butyl | 4 |
| tert-butyl | O-ethyl | 4 |
| tert-butyl | O-isopropyl | 4 |
| tert-butyl | O-tert-butyl | 4 |
| tert-octyl | O-ethyl | 4 |
| tert-butyl | O-ethyl | 5 |
| tert-butyl | tert-butyl | 4 |
| tert-butyl | O-ethyl | 6 |
advantageously in their cone or partial cone configuration.

8. - The process according to one of claims 6 or 7, **characterized by** the fact that the extracting molecule has a complexing constant Log K, in methanol at 25°C, of the alkaline cationic species to be extracted, higher than 3 and less than 11, preferably higher than 5 and less than 9.

9. - The process according to anyone of claims 6 to 8, **characterized by** the fact that the at least one alkaline cationic species is selected from lithium, sodium, potassium, rubidium and cesium.

10. - The process according to anyone of claims 6 to 9, **characterized by** the fact that the process consists in a selective extraction of alkaline salts with hydrophilic anions, such as chlorides.

11. - The process according to anyone of claims 1 to 10, **characterized by** the fact that the fluidizing agent is selected from the aromatic polar solvents, for example derived from dichlorobenzenes, dichlorotoluenes, derivatives thereof and mixtures thereof.

12. - The process according to any ne of claims 1 to 11, **characterized by** the fact that pKa of the solvating molecule of the complementary anionic species is of at least 10.5 and is lower than the pKa of water at 25°C.

13. - A hydrophobic liquid organic composition constituted by the hydrophobic liquid organic phase as defined in point a) of claim 1, and including an extracting molecule of a non-alkaline cationic species as defined in claim 1 or 2, a solvating molecule of a complementay anionic species as defined in point a) of claim 1 or in claim 12, and optionally a fluidizing agent as defined in point a) of claim 1 or in claim 11.

14. - A hydrophobic liquid organic composition constituted by the hydrophobic liquid organic phase as defined in point a) of claim 6, and including an extracting molecule of an alkaline cationic species as defined in claim 6 or 7, a solvating molecule of a complementay anionic species as defined in point a) of claim 6 or in claim 12, and optionally a fluidizing agent as defined in point a) of claim 6 or in claim 11.
